(19)

Europäisches
Patentamt
European
Patent Office
Office européen
des brevets

(11) **EP 4 084 352 A1**

(12) **EUROPEAN PATENT APPLICATION**
published in accordance with Art. 153(4) EPC

(43) Date of publication:
**02.11.2022 Bulletin 2022/44**

(21) Application number: **21757171.0**

(22) Date of filing: **10.02.2021**

(51) International Patent Classification (IPC):
$H04B\ 7/0408^{(2017.01)}$   $H04B\ 7/06^{(2006.01)}$
$H04W\ 56/00^{(2009.01)}$   $H04W\ 4/40^{(2018.01)}$

(52) Cooperative Patent Classification (CPC):
**H04B 7/0408; H04B 7/06; H04W 4/40; H04W 56/00**

(86) International application number:
**PCT/KR2021/001820**

(87) International publication number:
**WO 2021/167293 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.02.2020 KR 20200021615**

(71) Applicant: **Samsung Electronics Co., Ltd.
Gyeonggi-do, 16677 (KR)**

(72) Inventors:
• **RYU, Hyunseok
Suwon-si, Gyeonggi-do 16677 (KR)**

• **SHIN, Cheolkyu
Suwon-si, Gyeonggi-do 16677 (KR)**
• **OH, Jinyoung
Suwon-si, Gyeonggi-do 16677 (KR)**
• **PARK, Sungjin
Suwon-si, Gyeonggi-do 16677 (KR)**
• **BANG, Jonghyun
Suwon-si, Gyeonggi-do 16677 (KR)**
• **YEO, Jeongho
Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD AND DEVICE FOR ACQUIRING BEAM INFORMATION IN WIRELESS COMMUNICATION SYSTEM**

(57)    The present disclosure relates to a communication method and system for converging a 5th-Generation (5G) communication system for supporting higher data rates beyond a 4th-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services.

FIG. 15

START

PERFORM SIDELINK SYNCHRONIZATION ~1501

EXCHANGE INFORMATION ON LOCATION VIA FIRST CARRIER ~1502

EXCHANGE BEAM-RELATED INFORMATION VIA FIRST CARRIER ~1503

TRANSMIT AND RECEIVE SIDELINK CONTROL/DATA VIA SECOND CARRIER ~1504

END

EP 4 084 352 A1

## Description

### [Technical Field]

The disclosure relates to a method of acquiring beam information in a wireless communication system and, more particularly, to a method and apparatus which obtain beam information for transmitting and receiving sidelink control information and data information in a sidelink communication system using an analog beam.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

As various services can be provided in line with the aforementioned contents and the development of a mobile communication system, there is a need for a scheme for effectively providing such services.

### [Disclosure of Invention]

### [Technical Problem]

The disclosure relates to a method and apparatus which obtain beam information for transmitting and receiving sidelink control information and data information in a sidelink communication system.

### [Solution to Problem]

Technical objects to be achieved in an embodiment of the disclosure are not limited to the aforementioned technical objects, and other technical objects not described above may be evidently understood by a person having ordinary knowledge in the art to which the disclosure pertains from the following description.

In the disclosure for solving the aforementioned problem, a method by a first user equipment (UE) in a wireless communication system includes performing sidelink synchronization with a second UE, transmitting location information of the first UE to the second UE through a first carrier, receiving information on a beam from the second UE through a first carrier, and transmitting sidelink control information and sidelink data information based on the received information on the beam. The beam is generated by the second UE based on the transmitted location information of the first UE and location information of the second UE, and the sidelink data information is transmitted through a second carrier.

In some examples, the sidelink control information is transmitted through the first carrier.

In some examples, the sidelink control information is transmitted through the second carrier, and the information on the beam includes at least one of a beam direction, a beam breadth, and a beam width.

In some examples, the method further includes receiving sidelink synchronization information. The second carrier is indicated by the received sidelink synchronization information.

In some examples, the sidelink synchronization information is received from at least one of a global navigation satellite system (GNSS), a base station, the second UE, and another sidelink UE.

In another example of the disclosure, a method by a second user equipment (UE) in a wireless communication system includes performing sidelink synchronization with a first UE, receiving location information of the first UE from the first UE through a first carrier, generating a beam based on the received location information of the first UE and location information of the second UE, transmitting information on the generated beam to the first UE through the first carrier, and receiving sidelink control information and sidelink data information based on the transmitted information on the beam. The sidelink data information is transmitted through a second carrier.

In another example of the disclosure, a first user equipment (UE) includes a transceiver capable of transmitting and receiving at least one signal and a controller combined with the transceiver. The controller is configured to perform sidelink synchronization with a second UE, transmit location information of the first UE to the second UE through a first carrier, receive information on a beam from the second UE through a first carrier, and transmit sidelink control information and sidelink data information based on the received information on the beam. The beam is generated by the second UE based on the transmitted location information of the first UE and location information of the second UE, and the sidelink data information is transmitted through a second carrier.

In another example of the disclosure, a second user equipment (UE) includes a transceiver capable of transmitting and receiving at least one signal and a controller combined with the transceiver. The controller is configured to perform sidelink synchronization with a first UE, receive location information of the first UE from the first UE through a first carrier, generate a beam based on the received location information of the first UE and location information of the second UE, transmit information on the generated beam to the first UE through the first carrier, and receive sidelink control information and sidelink data information based on the transmitted information on the beam. The sidelink data information is transmitted through a second carrier.

**[Advantageous Effects of Invention]**

According to the present disclosure, beam information for effectively transmitting and receiving sidelink control information and data information in a sidelink communication system using an analog beam can be obtained.

**[Brief Description of Drawings]**

FIGS. 1A, 1B, 1C, and 1D are diagrams of a system for describing an embodiment of the disclosure.

FIGS. 2A and 2B are diagrams illustrating a V2X communication method which is performed through a sidelink to which an embodiment of the disclosure is applied.

FIG. 3 is a diagram illustrating a protocol of a sidelink UE to which an embodiment of the disclosure is applied.

FIG. 4 is a diagram illustrating the type of synchronization signal which may be received by a sidelink UE to which an embodiment of the disclosure is applied.

FIG. 5 is a diagram illustrating a structure of a sidelink synchronization channel according to an embodiment of the disclosure.

FIGS. 6A and 6B are diagrams illustrating a method of transmitting a sidelink synchronization signal according to an embodiment of the disclosure.

FIG. 7 is a diagram illustrating a method of obtaining beam information between a transmission UE and a reception UE in sidelink communication according to an embodiment of the disclosure.

FIGS. 8A and 8B are diagrams illustrating a distance-based HARQ operation in sidelink communication according to an embodiment of the disclosure.

FIGS. 9A and 9B are diagrams illustrating a method of using a zone ID in sidelink communication according to an embodiment of the disclosure.

FIG. 10 is a diagram illustrating a problem with distance-based HARQ management in sidelink communication according to an embodiment of the disclosure.

FIG. 11 is another diagram illustrating a problem with distance-based HARQ management in sidelink communication according to an embodiment of the disclosure.

FIG. 12 is a diagram illustrating a method of obtaining a beam in sidelink communication according to an embodiment of the disclosure.

FIG. 13 is a diagram illustrating a procedure of obtaining a beam in sidelink communication according to an embodiment of the disclosure.

FIG. 14 is a diagram illustrating a method of obtaining a beam in sidelink communication according to an embodiment of the disclosure.

FIG. 15 is a diagram illustrating a procedure of obtaining a beam in sidelink communication according to an embodiment of the disclosure.

FIG. 16 is a diagram illustrating a structure of a UE according to an embodiment of the present disclosure.

FIG. 17 is a diagram illustrating a structure of a base station according to an embodiment of the present disclosure.

**[Mode for the Invention]**

Hereinafter, embodiments of the disclosure are described in detail with reference to the accompanying drawings.

In describing the embodiments, a description of technology contents that are well known in the art to which the disclosure pertains and that are not directly related to the disclosure is omitted in order to clearly deliver the subject matter of the disclosure without obscuring the subject matter of the disclosure by omitting an unnecessary description.

For the same reason, in the accompanying drawings, some elements are enlarged, omitted or schematically depicted. Furthermore, the size of each element does not accurately reflect its real size. In the drawings, the same or similar elements are assigned the same reference numerals.

Advantages and characteristics of the disclosure and a method for achieving the advantages and characteristics will become apparent from the embodiments described in detail later in conjunction with the accompanying drawings. However, the disclosure is not limited to the disclosed embodiments, but may be implemented in various different forms. The embodiments are merely provided to complete the disclosure and to fully notify a person having ordinary knowledge in the art to which the disclosure pertains of the category of the disclosure. The disclosure is defined by the category of the claims. Throughout the specification, the same reference numerals denote the same elements.

In the disclosure, it will be understood that each block of the flowchart illustrations and combinations of the blocks in the flowchart illustrations can be executed by computer program instructions. These computer program instructions may be mounted on the processor of a general purpose computer, a special purpose computer, or other programmable data processing equipment, so that the instructions executed by the processor of the computer or other programmable data processing equipment create means for executing the functions specified in the flowchart block(s). These computer program instructions may also be stored in a computer-usable or computer-readable memory that can direct a computer or other programmable data processing equipment to implement a function in a particular manner, such that the instructions stored in the a computer-usable or computer-readable memory produce an article of manufacture including instruction means that implement the function specified in the flowchart block(s). The computer program instructions may also be loaded on a computer or other programmable data processing equipment to cause a series of operational steps to be performed on the computer or other programmable data processing equipment to produce a computer-executed process, so that the instructions performing the computer or programmable data processing equipment provide steps for executing the functions described in the flowchart block(s).

Furthermore, each block of the flowcharts may represent a portion of a module, a segment, or code, which includes one or more executable instructions for executing a specified logical function(s). It should also be noted that in some alternative implementations, the functions noted in the blocks may occur out of order. For example, two blocks shown in succession may in fact be executed substantially concurrently, or the blocks may sometimes be executed in the reverse order, depending upon the functionality involved.

In this case, the term "unit", as used in the present embodiment means software or a hardware component, such as an FPGA or an ASIC, and the "unit" performs specific tasks. However, the term "~unit" does not mean that it is limited to software or hardware. The "unit" may advantageously be configured to reside on an addressable storage medium and configured to operate on one or more processors. Accordingly, the "unit" may include, for example, components, such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and "units" may be combined into fewer components and "units" or may be further separated into additional components and "units". Furthermore, the components and "units" may be implemented to operate on one or more CPUs within a device or a security multimedia card. Furthermore, in an embodiment, the "~ unit" may include one or more processors.

In specifically describing embodiments of the disclosure, a new RAN (NR), that is, a wireless access network, and a packet core (a 5G system or a 5G core network or a next generation (NG) core), that is, a core network, in the 5G mobile communication standard specified by 3GPP, that is, a mobile communication standard standardization organization, are major targets, but a major subject matter of the disclosure may be slightly changed without greatly deviating from the scope of the disclosure, and may be applied to other communication systems having a similar technical background. This may be made possible by a determination of a person having skilled technical knowledge in the art to which the present disclosure pertains.

In a 5G system, in order to support network automation, a network data collection and analysis function (NWDAF), that is, a network function for providing a function for analyzing data collected from a 5G network and providing the analyzed data, may be defined. The NWDAF may provide an unspecified network function (NF) with the results of collection/storage/analysis of information from the 5G network. The results of the analysis may be independently used by NFs.

Hereinafter, for convenience of description, some of terms and names defined in the 3<sup>rd</sup> generation partnership project long term evolution (3GPP LTE) standard (a standard for 5G, NR, LTE or a system similar thereto) may be used. However, the disclosure is not restricted by the terms and names, and may also be identically applied to systems that follow other standards.

Furthermore, a term for identifying an access node, terms to denote network entities, terms to denote messages, a term to denote an interface between network entities, terms to denote various types of identification information, etc., which are used in the following description, have been exemplified for convenience of description. Accordingly, the disclosure is not limited to terms used in the disclosure, and another term to denote a target having an equivalent technical meaning may be used.

In order to satisfy wireless data traffic demands that tend to increase after 4G communication system commercialization, efforts to develop an enhanced 5G communication system (new radio (NR)) are being made. In order to achieve a high data transfer rate, the 5G communication system has been designed to use even a resource in a mmWave band (e.g., a 28 GHz frequency band). In order to reduce a path loss of a radio wave and increase the transfer distance of a radio wave in the mmWave band, in the 5G communication system, beamforming, massive MIMO, full dimensional MIMO (FD-MIMO), an array antenna, analog beamforming and large scale antenna technologies are being discussed. In addition, in the 5G communication system, unlike in LTE, various subcarrier spacings, such as 30 kHz, 60 kHz, and 120 kHz, including 15 kHz are resourced. A physical control channel uses polar coding, and a physical data channel uses low density parity check (LDPC). In addition, CP-OFDM in addition to DFT-S-OFDM is also used as a waveform for uplink transmission. In LTE, hybrid ARQ (HARQ) retransmission of a transport block (TB) unit is resourced. In contrast, in 5G, HARQ retransmission based on a code block group (CBG) in which several code blocks (CBs) are bound may be additionally resourced.

Furthermore, in order to improve a network of a system, in the 5G communication system, technologies, such as an improved small cell, an advanced small cell, a cloud radio access network (cloud RAN), an ultra-dense network, device to device communication (D2D), a wireless backhaul, a vehicle to everything (V2X) network, cooperative communication, coordinated multipoints (CoMPs), and reception interference cancellation, are being developed.

Meanwhile, the Internet evolves from a human-centered connection network over which human generates and consumes information to Internet of things (IoT) through which information is exchanged and processed between distributed elements, such as things. An Internet of everything (IoE) technology in which a big data processing technology through a connection with a cloud server is combined with the IoT technology is emerging.

In order to implement the IoT, technical elements, such as the sensing technology, wired/wireless communication and network infrastructure, service interface technology and security technology, are required. Accordingly, technologies, such as a sensor network, machine to machine (M2M) and machine type communication (MTC) for a connection between things, are recently researched. In the IoT environment, an intelligent Internet technology (IT) service in which a new value is created for human life by collecting and analyzing data generated from connected things may be provided. The IoT may be applied to fields, such as a smart home, a smart building, a smart city, a smart car or a connected car, a smart grid, health care, smart home appliances, and advanced medical services, through convergence and composition between the existing information technology (IT) and various industries.

Accordingly, various attempts to apply the 5G communication system to an IoT network are being made. For example, technologies, such as a sensor network, machine to machine (M2M), and machine type communication (MTC), are implemented by schemes, such as beamforming, MIMO, and an array antenna, that is, 5G communication technologies. The application of a cloud radio access network (cloud RAN) as the aforementioned big data processing technology may be said to be an example of convergence between the 3eG technology and the IoT technology. As described above, in a communication system, a plurality of services may be provided to a user. In order to provide the user with the plurality of services, there is a need for a method capable of providing the services within the same time interval suitably for a characteristic and an apparatus using the same. Various services provided in the 5G communication system are researched, and one of the services is a service that satisfies a low latency and high reliability requirement condition.

In the case of vehicle communication, a standardization task for LTE-based V2X in 3GPP Rel-14 and Rel-15 has been completed based on a device-to-device (D2D) communication structure. Efforts to develop V2X based on 5G new radio (NR) are currently being made. In NR V2X, unicast communication, groupcast (or multicast) communication, and broadcast communication between UEs are expected to be supported. Furthermore, NR V2X has an object of providing more advanced services, such as platooning, advanced driving, an extended sensor, and remote driving, unlike LTE V2X having an object of transmitting and receiving basic safety information that is necessary for the driving of a vehicle on a road.

Since the aforementioned advanced services require a high data transfer rate, the NR V2X system may require a relatively wide bandwidth compared to a conventional 4G LTE V2X system. To this end, an operation in a high frequency band needs to be supported, and a coverage problem occurring due to a frequency characteristic needs to be solved through analog beamforming. A method and apparatus for obtaining beam information between transmission UEs and reception UEs are necessary for such an analog beamforming system.

An embodiment of this specification has been proposed to support the aforementioned scenario, and has an object of providing a method and apparatus for obtaining beam information between UEs.

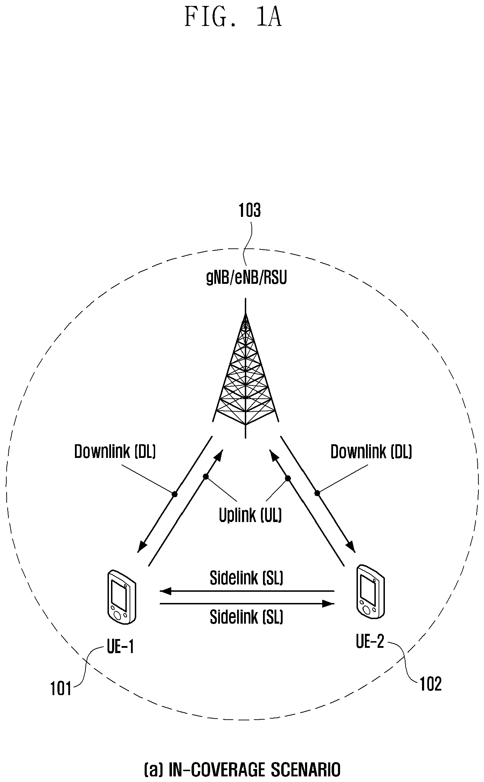

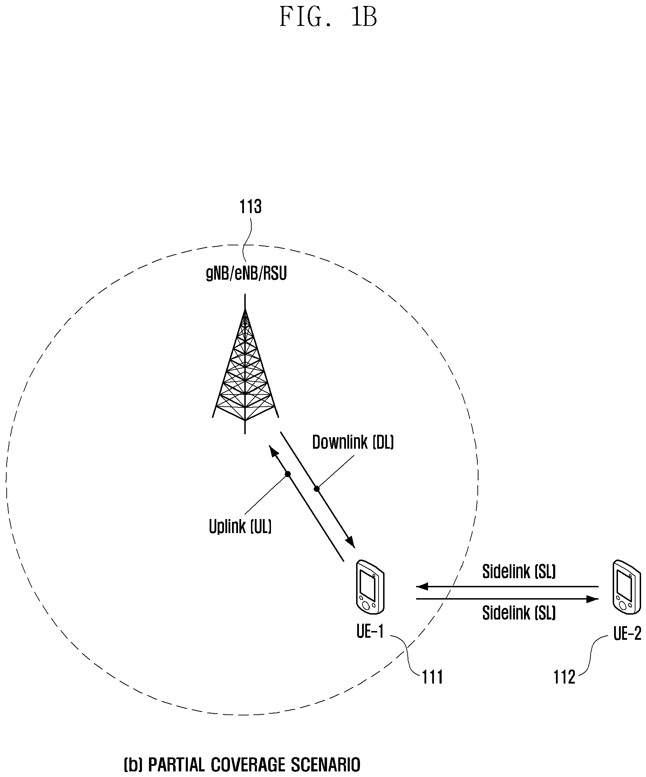

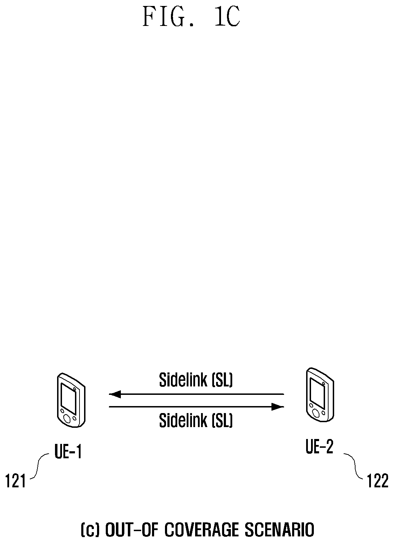

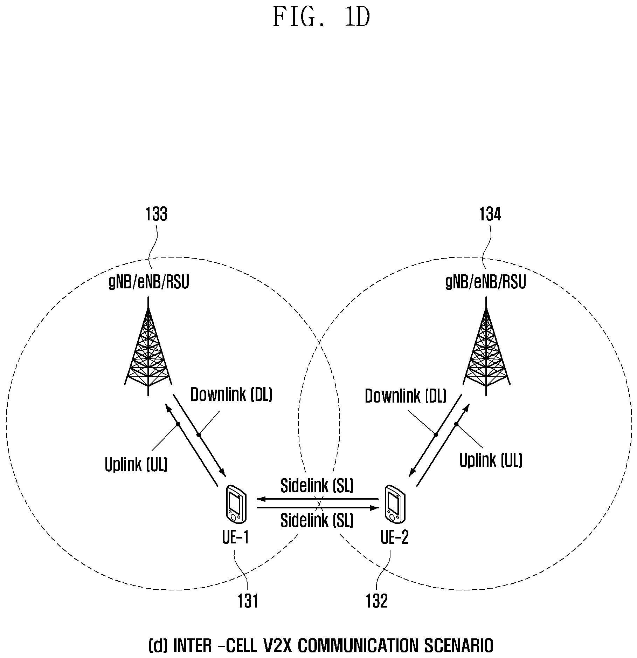

FIGS. 1A, 1B, 1C, and 1D are diagrams of a system for describing an embodiment of the disclosure.

FIG. 1A is an example of a case where all V2X UEs (UE-1 101 and a UE-2 102) are disposed in coverage of a base station 103.

All of the V2X UEs 101 and 102 disposed in coverage of the base station may receive data and control information from the base station 103 through downlink (DL) or may transmit data and control information to the base station 103 through uplink (UL). In this case, the data and control information may be data and control information for V2X communication. Alternatively, the data and control information may be data and control information for common cellular communication. Furthermore, the V2X UEs 101 and 102 may transmit/receive data and control information for V2X communication through a sidelink (SL).

FIG. 1B is an example of a case where a UE-1 111 among V2X UEs is disposed in coverage of a base station and a UE-2 112 is disposed out of coverage of the base station 113. The example of FIG. 1B may be called an example about partial coverage.

The UE-1 111 disposed in coverage of the base station 113 may receive data and control information from the base station 113 through downlink or may transmit data and control information to the base station through uplink.

The UE-2 112 disposed out of coverage of the base station cannot receive data and control information from the base station through downlink, and cannot transmit data and control information to the base station through uplink.

The UE-2 112 may transmit/receive data and control information for V2X communication to/from the UE-1 111 through a sidelink.

FIG. 1C is an example of a case where all V2X UEs are disposed out of coverage of a base station.

Accordingly, a UE-1 121 and a UE-2 122 cannot receive data and control information from a base station through downlink, and cannot transmit data and control information to the base station through uplink.

The UE-1 121 and the UE-2 122 may transmit/receive data and control information for V2X communication through a sidelink.

FIG. 1D is an example of a scenario in which UEs disposed in different cells perform V2X communication. Specifically, FIG. 1D illustrates a case where a V2X transmission UE and a V2X reception UE have accessed different base stations (RRC connected state) or have camped on the different base stations (RRC connection release state, that is, RRC idle state). In this case, a UE-1 131 may be a V2X transmission UE, and a UE-2 132 may be a V2X reception UE. Alternatively, the UE-1 131 may be a V2X reception UE, and the UE-2 132 may be a V2X transmission UE. The UE-1 131 may receive a V2X-dedicated system information block (SIB) from a base station 133 that the UE-1 131 has accessed (or on which the UE-1 131 is camping). The UE-2 132 may receive a V2X-dedicated SIB from another base station 134 that the UE-2 132 has accessed (or on which the UE-2 132 is camping). In this case, information of the V2X-dedicated SIB received by the UE-1 131 and information of the V2X-dedicated SIB received by the UE-2 132 may be the same or different from each other. If the pieces of SIB information are different from each other, the UE-1 and the UE-2 may receive different types of information for sidelink communication as SIBs from the base stations that the UE-1 and the UE-2 have accessed (or on which the UE-1 and the UE-2 are camping). In such a case, pieces of information need to be unified in order to perform sidelink communication between UEs disposed in different cells.

FIGS. 1A, 1B, 1C, and 1D illustrate a V2X system including two UEs (UE-1 and UE-2) for convenience of description, but the disclosure is not limited thereto. Furthermore, the uplink and the downlink between a base station and V2X UEs may be named a Uu interface, and a sidelink between V2X UEs may be named a PC5 interface. Accordingly, in the disclosure, the Uu interface and the PC5 interface may be interchangeably used.

Meanwhile, in the disclosure, a UE may mean a UE supporting device-to-device (D2D), a vehicle supporting vehicular-to-vehicular (V2V), a vehicle supporting vehicular-to-pedestrian (V2P) or a handset (i.e., a smartphone) of a pedestrian, a vehicle supporting vehicular-to-network (V2N), or a vehicle supporting vehicular-to-infrastructure (V2I). Furthermore, in the disclosure, a UE may mean a road side unit (RSU) on which a UE function is mounted, an RSU on which a base station function is mounted, or an RSU on which some of a base station function and some of a UE function are mounted.

In the disclosure, V2X communication may mean D2D, V2V, or V2P, and may be interchangeably used with sidelink communication.

Furthermore, in the disclosure, it is previously defined that a base station may be a base station that supports both V2X communication and common cellular communication or a base station that supports only V2X communication. Furthermore, in this case, a base station may mean a 5G base station (gNB), a 4G base station (eNB), or a road side unit (RSU). Accordingly, in the disclosure, a base station and an RSU may be interchangeably used unless specially mentioned because they may be used as the same concept.

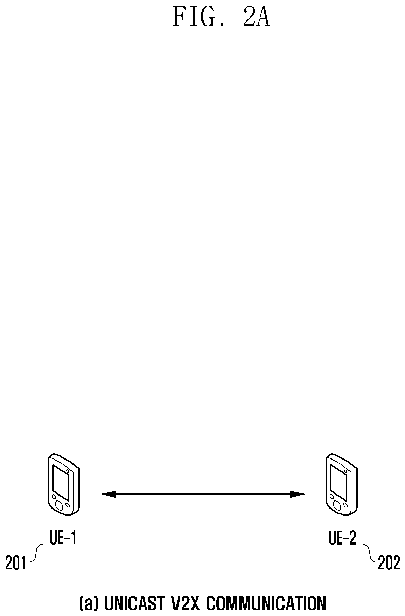

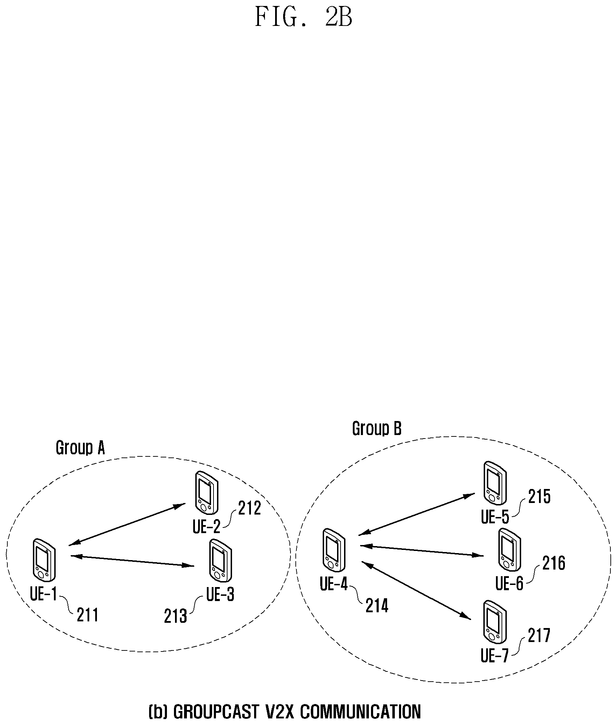

FIGS. 2A and 2B are diagrams illustrating a V2X communication method which is performed through a sidelink to which an embodiment of the disclosure is applied.

As in FIG. 2A, a transmission UE UE-1 and a reception UE UE-2 may perform one-to-one communication, which may be named unicast communication.

As in FIG. 2B, a transmission UE UE-1 211 or UE-4 214 and reception UEs UE-2 212 and UE-3 213 or UE-5 215, UE-6 216, and UE-7 217 may perform one-to-many communication, which may be named groupcast or multicast.

FIG. 2B is a diagram illustrating that the UE-1 211, the UE-2 212, and the UE-3 213 form one group (group A) and perform groupcast communication, and the UE-4 214, the UE-5 215, the UE-6 216, and the UE-7 217 form another group (group B) and perform groupcast communication. Each UE may perform groupcast communication only within a group to which the UE belongs. Communication between different groups may be performed through one method among unicast, groupcast, or broadcast communication. FIG. 2B illustrates that two groups have been formed, but the disclosure is not limited thereto.

Meanwhile, although not illustrated in FIGS. 2A and 2B, V2X UEs may perform broadcast communication. The broadcast communication means a case where data and control information transmitted by a V2X transmission UE through a sidelink are received by all V2X UEs. For example, in FIG. 2B, if it is assumed that the UE-1 is a transmission UE for broadcast, all of the UEs (the UE-2 212, the UE-3 213, the UE-4 214, the UE-5 215, the UE-6 216, and the UE-7 217) may be reception UEs that receive data and control information transmitted by the UE-1211.

The sidelink unicast, groupcast, and broadcast communication methods according to an embodiment of the disclosure may be supported in-coverage, partial-coverage, and out-of-coverage scenarios.

In a sidelink system, the following methods may be used for resource allocation.

(1) Mode 1 resource allocation

Mode 1 resource allocation means a resource allocation (scheduled resource allocation) method scheduled by a base station. More specifically, in mode 1 resource allocation, a base station may allocate a resource used for sidelink transmission to RRC-connected UEs by using a dedicated scheduling method. The scheduled resource allocation method may be effective in interference management and the management of a resource pool (dynamic allocation and/or semi-persistent transmission) because a base station can manage a resource of a sidelink. If a UE in an RRC connection mode has data to be transmitted to other UEs, the UE may transmit information that notifies a base station that there is the data to be transmitted to the other UEs by using an RRC message or a medium access control (MAC) control element (CE). For example, the RRC message may be a sidelink UE information (SidelinkUEInformation) message or a UE assistance information (UEAssistanceInformation) message. Furthermore, the MAC CE may correspond to a BSR MAC CE, a scheduling request (SR), etc. including at least one of an indicator that provides notification of a buffer status report (BSR) for V2X communication and information on the size of data buffered for sidelink communication. The mode 1 resource allocation method may be applied to a case where a V2X transmission UE is disposed in coverage of a base station because a sidelink transmission UE receives a resource scheduled by the base station.

(2) Mode 2 resource allocation

In Mode 2, a sidelink transmission UE can autonomously select a resource (UE autonomous resource selection). More specifically, Mode 2 is a method of providing, by a base station, a sidelink transmission and reception resource pool for a sidelink to a UE through system information or an RRC message (e.g., an RRCReconfiguration message or a PC5-RRC message) and selecting, by a transmission UE that has received the transmission and reception resource pool, a resource pool and resource according to a determined rule. In the example, Mode 2 may be applied to a case where a sidelink transmission UE and reception UE are in coverage of a base station because the base station provides configuration information for the sidelink transmission and reception resource pool. If the sidelink transmission UE and reception UE are out of coverage of the base station, the sidelink transmission UE and reception UE may perform a Mode 2 operation in a preconfigured transmission and reception resource pool. The UE autonomous resource selection method may include zone mapping, sensing-based resource selection, random selection, etc.

(3) Additionally, although a UE is in coverage of a base station, resource allocation or resource selection may not be performed by using the scheduled resource allocation or UE autonomous resource selection mode. In such a case, the UE may perform sidelink communication through a preconfigured sidelink transmission and reception resource pool (preconfiguration resource pool).

A sidelink resource allocation method according to the embodiment of the disclosure may be applied to various embodiments of the disclosure.

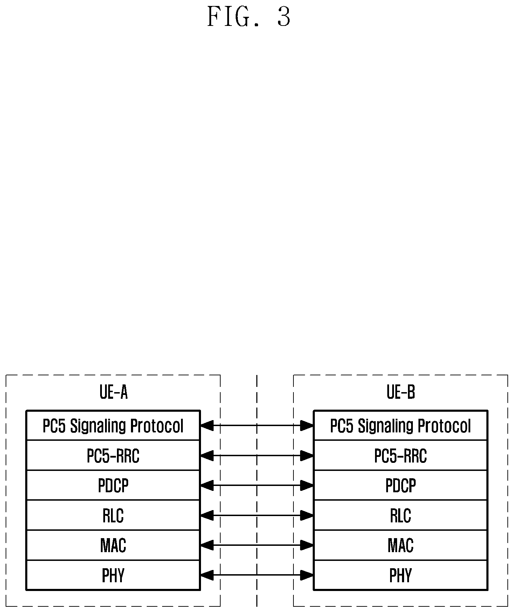

FIG. 3 is a diagram illustrating a protocol of a sidelink UE to which an embodiment of the disclosure is applied.

Although not illustrated in FIG. 3, application layers of a UE-A and a UE-B may perform service discovery. In this case, the service discovery may include discovery regarding that each UE will perform which sidelink communication method (unicast, groupcast, or broadcast). Accordingly, in FIG. 3, it may be assumed that each of the UE-A and the UE-B has recognized that it will perform a unicast communication method through a service discovery process performed in the application layer. The sidelink UEs may obtain information on a source identifier (ID) and a destination identifier (ID) for sidelink communication in the aforementioned service discovery process.

When the service discovery process is completed, a PC-5 signaling protocol layer illustrated in FIG. 3 may perform a direct link connection setup procedure between the UEs. In this case, security configuration information for the direct communication between the UEs may be exchanged.

When the direct link connection setup is completed between UEs, a PC-5 RRC layer in FIG. 3 may perform a PC-5 radio resource control (RRC) setup procedure between the UEs. In this case, information on the capabilities of the UE-A and the UE-B may be exchanged, and the UE-A and the UE-B may exchange access stratum (AS) layer parameter information for unicast communication.

When the PC-5 RRC setup procedure is completed, the UE-A and the UE-B may perform unicast communication.

In the example, unicast communication has been described as an example, but may be expanded to groupcast communication. For example, if the UE-A, the UE-B, and a UE-C not illustrated in FIG. 3 perform groupcast communication, as described above, the UE-A and the UE-B may perform service discovery, direct link setup between UEs, and a PC-5 RRC setup procedure for unicast communication. Furthermore, the UE-A and the UE-C may also perform service discovery, direct link setup between UEs, and a PC-5 RRC setup procedure for unicast communication. Finally, the UE-B and the UE-C may perform service discovery, direct link setup between UEs, and a PC-5 RRC setup procedure for unicast communication. That is, a separate PC-5 RRC setup procedure for groupcast communication is not performed, but a PC-5 RRC setup procedure for unicast communication may be performed in each of a transmission UE and reception UE pair that participate in the groupcast communication. In the groupcast method, however, a PC5 RRC setup procedure for unicast communication does not need to be always performed. For example, a scenario for groupcast communication performed without PC5 RRC connection setup may be present. In this case, a PC5 connection setup procedure for unicast transmission may be omitted.

A PC-5 RRC setup procedure for unicast or groupcast communication may be applied to all of in-coverage, partial coverage, and out-of-coverage illustrated in FIG. 1. If UEs attempting to perform unicast or groupcast communication are in coverage of a base station, the corresponding UEs may perform a PC-5 RRC setup procedure before or after the UEs perform downlink or uplink synchronization with the base station.

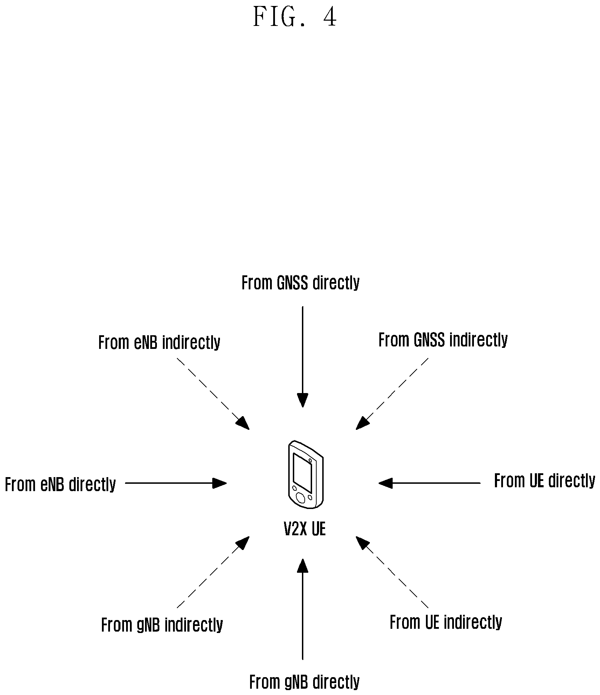

FIG. 4 is a diagram illustrating the type of synchronization signal which may be received by a sidelink UE to which an embodiment of the disclosure is applied.

Specifically, the following sidelink synchronization signals may be received from various sidelink synchronization signal sources.

- A sidelink UE may directly receive a synchronization signal from a global navigation satellite system (GNSS) or a global positioning system (GPS).

    * In such a case, a sidelink synchronization signal source may be the GNSS.

- A sidelink UE may indirectly receive a synchronization signal from a GNSS or a GPS.

    * Indirectly receiving the synchronization signal from the GNSS may mean a case where a sidelink UE-A receives a sidelink synchronization signal (SLSS) transmitted by a sidelink UE-1 directly synchronized with the GNSS. In this case, the sidelink UE-A may receive the synchronization signal from the GNSS through a 2-hop. Furthermore, for example, a sidelink UE-2 that has been synchronized with the SLSS transmitted by the sidelink UE-1 synchronized with the GNSS may transmit an SLSS. The sidelink UE-A that has received the SLSS may receive the synchronization signal from the GNSS through a 3-hop. Likewise, the sidelink UE-A may receive the synchronization signal from the GNSS through a 3-hop or more.
    * In such a case, a sidelink synchronization signal source may be another sidelink UE synchronized with the GNSS.

- A sidelink UE may directly receive a synchronization signal from an LTE base station (eNB).

    * A sidelink UE may directly receive a primary synchronization signal (PSS)/secondary synchronization signal (SSS) transmitted by an LTE base station.
    * In such a case, a sidelink synchronization signal source may be an eNB.

- A sidelink UE may indirectly receive a synchronization signal from an LTE base station (eNB).

    * Indirectly receiving the synchronization signal from the eNB may mean a case where a sidelink UE-A receives an SLSS transmitted by a sidelink UE-1 directly synchronized with the eNB. In this case, the sidelink UE-A may receive the synchronization signal from the eNB through a 2-hop. Furthermore, for example, a sidelink UE-2 that has been synchronized with the SLSS transmitted by the sidelink UE-1 directly synchronized with the eNB may transmit an SLSS. The sidelink UE-A that has received the SLSS may receive the synchronization signal from the eNB through a 3-hop. Likewise, the sidelink UE-A may receive the synchronization signal from the eNB through a 3-hop or more.

* In such a case, a sidelink synchronization signal source may be another sidelink UE synchronized with the eNB.

- A sidelink UE may indirectly receive a synchronization signal from an NR base station (gNB).

    * Indirectly receiving the synchronization signal from the gNB may mean a case where another sidelink UE-A receives an SLSS transmitted by a sidelink UE-1 directly synchronized with the gNB. In this case, the sidelink UE-A may receive the synchronization signal from the gNB through a 2-hop. Furthermore, for example, a sidelink UE-2 that has been synchronized with the SLSS transmitted by the sidelink UE-1 directly synchronized with the gNB may transmit an SLSS. The sidelink UE-A that has received the SLSS may receive the synchronization signal from the gNB through a 3-hop. Likewise, the sidelink UE-A may receive the synchronization signal from the gNB through a 3-hop or more.
    * In such a case, a sidelink synchronization signal source may be another sidelink UE synchronized with the gNB.

- A sidelink UE-A may directly receive a synchronization signal from another sidelink UE-B.

    * If the sidelink UE-B has not detected an SLSS transmitted by a GNSS, a gNB, an eNB, or another sidelink UE as a synchronization signal source, the sidelink UE-B may transmit an SLSS based on its timing. The sidelink UE-A may directly receive the SLSS transmitted by the sidelink UE-B.
    * In such a case, a sidelink synchronization signal source may be the sidelink UE.

- A sidelink UE-A may indirectly receive a synchronization signal from another sidelink UE-B.

    * Indirectly receiving the synchronization signal from the sidelink UE-B may mean a case where the sidelink UE-A receives an SLSS transmitted by a sidelink UE-1 directly synchronized with the sidelink UE-B. In this case, the sidelink UE-A may receive the synchronization signal from the sidelink UE-B through a 2-hop. Furthermore, for example, a sidelink UE-2 that has been synchronized with the SLSS transmitted by the sidelink UE-1 directly synchronized with the sidelink UE-B may transmit an SLSS. The sidelink UE-A that has received the SLSS may receive the synchronization signal from the sidelink UE-B through a 3-hop. Likewise, the sidelink UE-A may receive the synchronization signal from the sidelink UE-B through a 3-hop or more.

* In such a case, a sidelink synchronization signal source may be another sidelink UE synchronized with the sidelink UE.

A sidelink UE may receive a synchronization signal from the aforementioned various synchronization signal sources, and may perform synchronization with a synchronization signal transmitted by a synchronization signal source having high priority, according to preconfigured priority.

For example, the following priorities may be preconfigured in order from a synchronization signal having high priority to a synchronization signal having low priority.

- Case A

1) A synchronization signal transmitted by a GNSS > 2) a synchronization signal transmitted by a UE that directly performs synchronization from a GNSS > 3) a synchronization signal transmitted by a UE that indirectly performs synchronization from a GNSS > 4) a synchronization signal transmitted by an eNB or a gNB (eNB/gNB) > 5) a synchronization signal transmitted by a UE that directly performs synchronization from an eNB/gNB > 6) a synchronization signal transmitted by a UE indirectly performs synchronization from an eNB/gNB > 7) a synchronization signal transmitted by a UE that does not directly or indirectly perform synchronization on a GNSS or an eNB/gNB.

Case A is an example of a case where a synchronization signal transmitted by a GNSS has the highest priority. In contrast, a case where a synchronization signal transmitted by an eNB or a gNB (eNB/gNB) has the highest priority may be taken into consideration. The following priorities may be preconfigured.

- Case B

1) A synchronization signal transmitted by an eNB/gNB > 2) a synchronization signal transmitted by a UE that directly performs synchronization from an eNB/gNB > 3) a synchronization signal transmitted by a UE that indirectly performs synchronization from an eNB/gNB > 4) a synchronization signal transmitted by a GNSS > 5) a synchronization signal transmitted by a UE that directly performs synchronization from a GNSS > 6) a synchronization signal transmitted by a UE that indirectly performs synchronization from a GNSS > 7) a synchronization signal transmitted by a UE that does not directly or indirectly perform synchronization on a GNSS or an eNB/gNB.

Whether a sidelink UE has to follow the priorities of the Case A or the priorities of Case B may be configured by a base station or may be preconfigured. More specifically, if a sidelink UE is in coverage of a base station (in-coverage), the base station may configure whether the sidelink UE has to follow the priorities of Case A or Case B through system information (SIB) or RRC signaling. If a sidelink UE is out of coverage of a base station (out-of-coverage), whether the sidelink UE has to perform sidelink synchronization procedure based on the priorities of which one of Case A or Case B may be preconfigured.

Meanwhile, if a base station configures Case A for a sidelink UE through system information or RRC signaling, the base station may additionally configure whether the sidelink UE has to take into consideration the priority 4 (a case where the sidelink UE is synchronized with a synchronization signal transmitted by an eNB or a gNB (eNB/gNB)), the priority 5 (a case where the sidelink UE is synchronized with a synchronization signal transmitted by a UE that directly performs synchronization from an eNB/gNB), and the priority 6 (a case where the sidelink UE is synchronized with a synchronization signal transmitted by a UE that indirectly performs synchronization from an eNB/gNB) in Case A. That is, if Case A has been configured and taking into consideration the priority 4, priority 5, and priority 6 has be additionally configured, all the priorities of Case A may be taken into consideration (i.e., from the priority 1 to the priority 7). In contrast, if Case A has been configured and taking into consideration the priority 4, priority 5, and priority 6 has not been configured or Case A has been configured and not taking into consideration the priority 4, priority 5, and priority 6 has been configured, the priority 4, priority 5, and priority 6 may be omitted from Case A (i.e., only the priority 1, priority 2, priority 3, and priority 7 are taken into consideration).

A sidelink synchronization signal mentioned in this specification may mean a sidelink synchronization signal block (S-SSB). It is specified that the S-SSB may include a sidelink primary synchronization signal (S-PSS), a sidelink secondary synchronization signal (S-SSS), and a physical sidelink broadcast channel (PSBCH). In this case, the S-PSS may include a Zadoff-Chu sequence or an M-sequence. The S-SSS may include an M-sequence or a gold sequence. As in a PSS/SSS in a cellular system, a sidelink ID may be transmitted through a combination of an S-PSS and an S-SSS or only an S-SSS not a combination of an S-PSS and an S-SSS. Like a physical broadcast channel (PBCH) in a cellular system, the PSBCH may transmit a master information block (MIB) for sidelink communication.

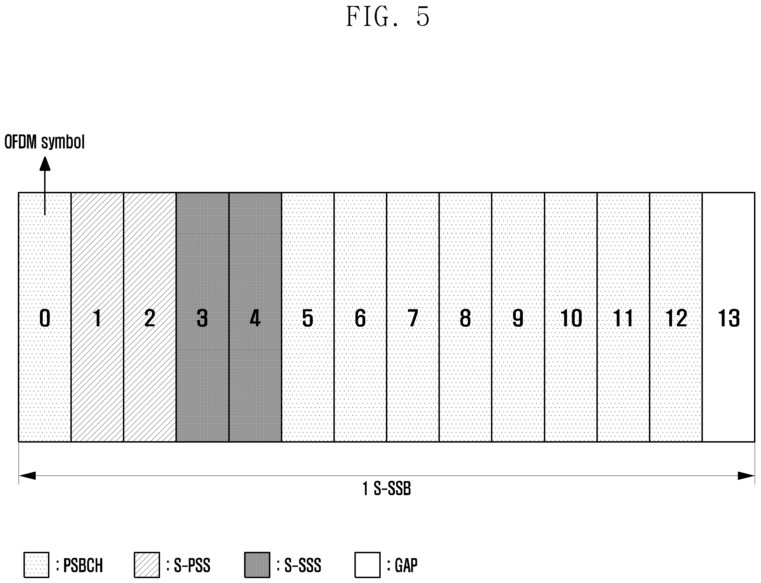

FIG. 5 is a diagram illustrating a structure of a sidelink synchronization channel according to an embodiment of the disclosure.

The sidelink synchronization channel may be represented by being replaced with a sidelink synchronization signal block (S-SSB). As illustrated in FIG 5, one S-SSB may include 14 symbols. One S-SSB may include a sidelink primary synchronization signal (S-PSS), a sidelink secondary synchronization signal (S-SSS), a physical sidelink broadcast channel (PSBCH), and a guard period (GAP). In this case, each of the S-PSS and the S-SSS may include two OFDM symbols, the PSBCH may include nine OFDM symbols, and the GAP may include one OFDM symbol.

In this case, as illustrated in FIG. 5, the S-PSS may be mapped to OFDM symbol indices 1 and 2, the S-SSS may be mapped to OFDM symbol indices 3 and 4, and the GAP may be mapped to the last OFDM symbol (i.e., an OFDM symbol index 13) of the S-SSB. The PSBCH may be mapped to the remaining OFDM symbols except the S-PSS, the S-SSS, and the GAP. FIG. 5 illustrates that the S-PSS and the S-SSS are disposed at continuous symbols, but the S-PSS and the S-SSS may be disposed with one symbol interposed therebetween. That is, the S-PSS may be mapped to the OFDM symbol indices 1 and 2, the S-SSS may be mapped to the OFDM symbol indices 4 and 5, and the PSBCH may be mapped to the OFDM symbol indices 0, 3, 6, 7, 8, 9, 10, 11, and 12. Meanwhile, although not illustrated in FIG. 5, a demodulation reference signal (DMRS) may be transmitted in each of the OFDM symbol to which the PSBCH is mapped.

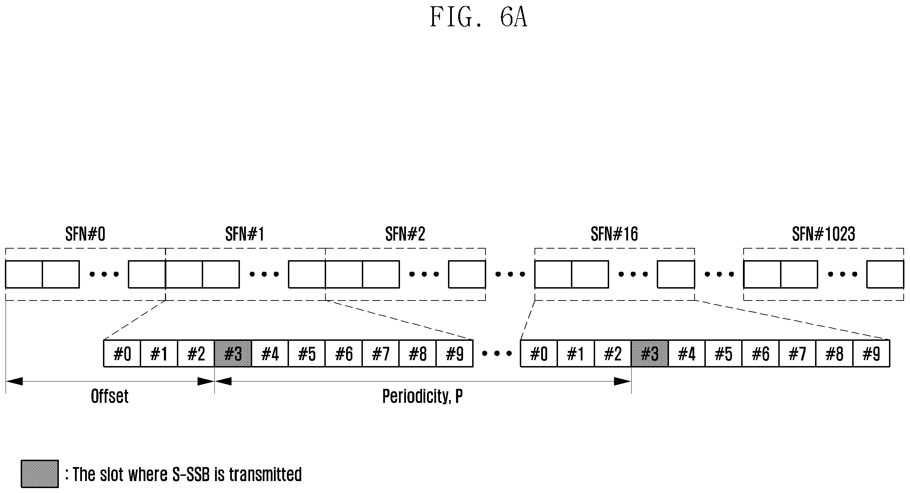

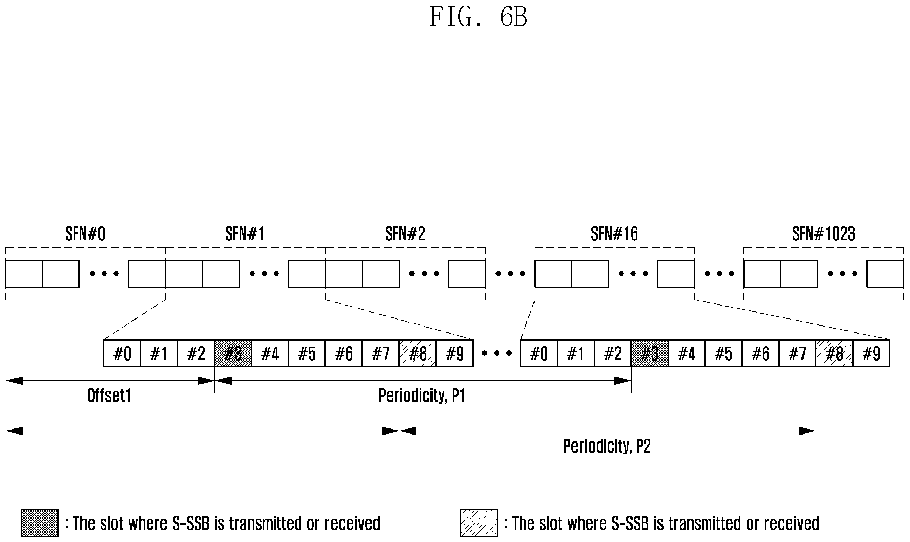

FIGS. 6A and 6B are diagrams illustrating a method of transmitting a sidelink synchronization signal block according to an embodiment of the disclosure.

In FIGS. 6A to 6B, a sidelink synchronization signal source UE that transmits a sidelink synchronization signal block (S-SSB) may be configured with information on a start point at which the S-SSB is transmitted by a base station or may be preconfigured with the information. More specifically, if a sidelink synchronization signal source is disposed in coverage of the base station (in-coverage), the base station may configure the information on the start point at which the sidelink synchronization signal source UE may transmit the S-SSB through system information (SIB) or RRC configuration information. In this case, the information on the S-SSB transmission start point may mean an offset. As illustrated in FIGS. 6A and 6B, the offset may mean a difference between a No.0 slot of a system frame number (SFN) No.0 of the base station where the UE attempting to transmit the S-SSB is disposed and a start slot of periodicity in which the S-SSB is actually transmitted.

Meanwhile, if the sidelink signal source is disposed out of coverage of the base station (out-of-coverage), information on the start point at which the S-SSB may be transmitted may be preconfigured for the UE. In this case, the information on the S-SSB transmission start point may mean an offset. The offset may mean a difference between a No.0 slot of a direct frame number (DFN) No.0 of the UE attempting to transmit the S-SSB and a start slot of the periodicity in which the S-SSB is actually transmitted.

FIG. 6A illustrates a case where one offset is configured (or preconfigured), and FIG. 6B illustrates a case where two offsets are configured (or preconfigured). The cases where one offset and two offsets are configured may have the same meanings as cases where one time resource for S-SSB transmission and two time resources for S-SSB transmission are configured, respectively. Meanwhile, although not illustrated in FIGS. 6A and 6B, a case where three offsets are configured may be present. In such a case, the case where three offsets are configured may have the same meaning as a case where three time resources for S-SSB transmission are configured. If a sidelink UE is disposed in coverage of a base station, a maximum of one time resource for S-SSB transmission may be configured. In case that a sidelink UE is disposed out of coverage of a base station, a maximum of three time resources for S-SSB transmission may be configured (or preconfigured) (i.e., two or three resources may be configured or preconfigured).

In FIGS. 6A and 6B, a 15 kHz subcarrier spacing (SCS) has been assumed. In such a case, 1 slot may have the same concept as 1 subframe. Although not illustrated in FIGS. 6A and 6B, if a subcarrier spacing is defined as 15 kHz $\times 2^n$ and n is a positive integer (i.e., the subcarrier spacing is greater than 15 kHz), 1 subframe may include $2^n$ slots. In contrast, if n is a negative integer (i.e., the subcarrier spacing is smaller than 15 kHz), 1 slot may include $2^n$ subframes. Furthermore, in FIGS. 6A and 6B, one system frame (or radio frame) may include 10 slots because the 15 kHz subcarrier spacing has been assumed. Meanwhile, 1 slot may always include 14 OFDM symbols as illustrated in FIG. 5 regardless of a subcarrier spacing.

As described above, FIG. 6A illustrates that one time resource for S-SSB transmission has been configured. In such a case, only one offset value indicative of a start point for S-SSB transmission may be configured. More specifically, FIG. 6A illustrates that a start point at which an S-SSB is transmitted is a No.3 slot of a No.1 SFN. This may mean that the transmission of the S-SSB is started after an offset of 13 slots on the basis of a No.0 slot of a No.0 SFN. Accordingly, a base station may configure an offset value as 13 slots for an S-SSB transmission UE through system information or RRC signaling. The sidelink UE may transmit the S-SSB in the corresponding slots by using the configured offset value. Likewise, a UE disposed out of coverage of the base station may transmit an S-SSB in a corresponding slot by using a preconfigured offset value. In this case, the S-SSB transmitted in the corresponding slot may have the structure illustrated in FIG. 5 to the structure described with reference to FIG. 5.

As illustrated in FIG. 6A, the S-SSB first transmitted in the No.3 slot of the No. 1 SFN may be repeatedly transmitted every periodicity of P slots. The P value may be fixed or may be configured through system information or RRC signaling from a base station (if a sidelink UE is disposed out of coverage of the base station, the p value may be preconfigured). In FIG. 6A, P = 160 ms (160 subframes or 160 slots) has been assumed.

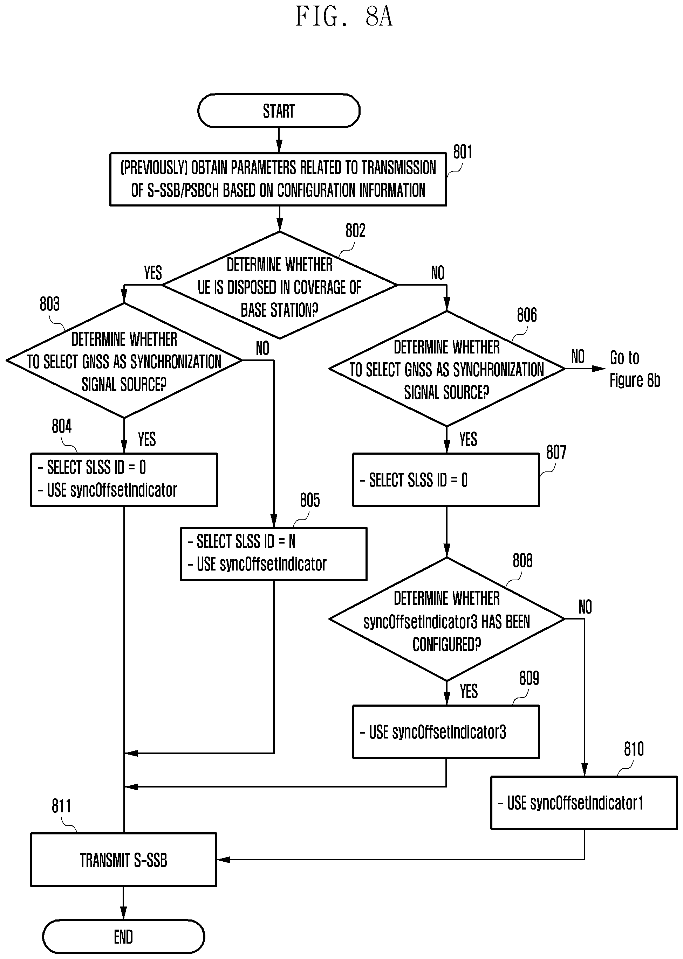

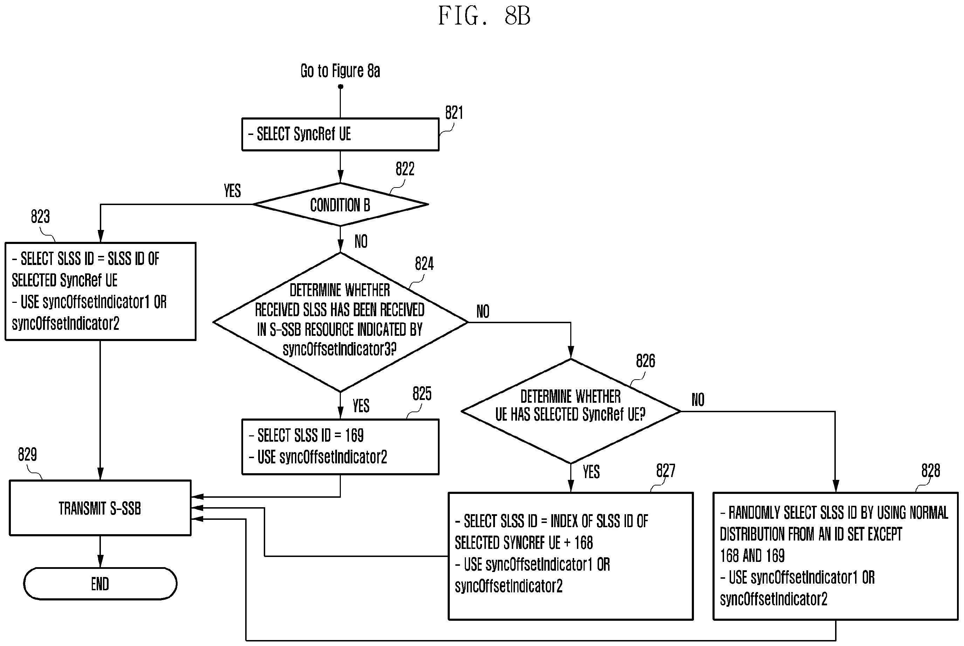

FIG. 6B illustrates that two time resources for S-SSB transmission have been configured. In such a case, two offset values indicative of a start point for S-SSB transmission may be configured. As described above, if a sidelink UE is disposed out of coverage of a base station, two offset values may be preconfigured. The UE for which two time resources for S-SSB transmission have been preconfigured through the two offset values does not fully transmit the S-SSB in the two time resources, but may transmit the S-SSB in one of the two resources and receive an S-SSB transmitted by another sidelink UE in the remaining one resource. This may be for solving a half-duplexing problem in that the transmission and reception of an S-SSB are not simultaneously performed. In which one of the aforementioned two resources the S-SSB needs to be transmitted and in which one of the aforementioned two resources an S-SSB needs to be received will be described in detail with reference to FIGS. 8A and 8B.

Like FIG. 6A, FIG. 6B illustrates that a time resource for the first S-SSB transmission is placed at a No.3 slot of a No.1 SFN, that is, after 13 slots on the basis of a No.0 slot of a No.0 SFN. Accordingly, an offset1 value may be 13 slots as in FIG. 6A. Furthermore, FIG. 6B illustrates that a time resource for the second S-SSB transmission is placed at a No.8 slot of the No.1 SFN, that is, after 18 slots on the basis of the No.0 slot of the No.0 SFN. Accordingly, an offset2 value may be 18 slots. Accordingly, a sidelink UE may receive or transmit an S-SSB in corresponding slots by using the configured offset values.

The S-SSB first transmitted in the No.3 slot of the No.1 SFN may be repeatedly transmitted every periodicity of P1 slots as illustrated in FIG. 6B. The S-SSB first transmitted in the No.8 slot of the No.1 SFN may be repeatedly transmitted every periodicity of P2 slots as illustrated in FIG. 6B. The P1 and P2 values may be fixed or preconfigured. P1 and P2 may be identical or different values. In FIG. 6B, P1 = P2 = 160 ms (160 subframes or 160 slots) has been assumed.

Meanwhile, although not illustrated in FIGS. 6A and 6B, if three time resources for S-SSB transmission have been configured, three offset values may be preconfigured. As in the case where two S-SSB transmission resources have been configured, an S-SSB is not fully transmitted in the three S-SSB transmission resources. In which S-SSB resource the S-SSB needs to be transmitted and in which S-SSB resource an S-SSB needs to be received will be described in detail with reference to FIGS. 8A and 8B.

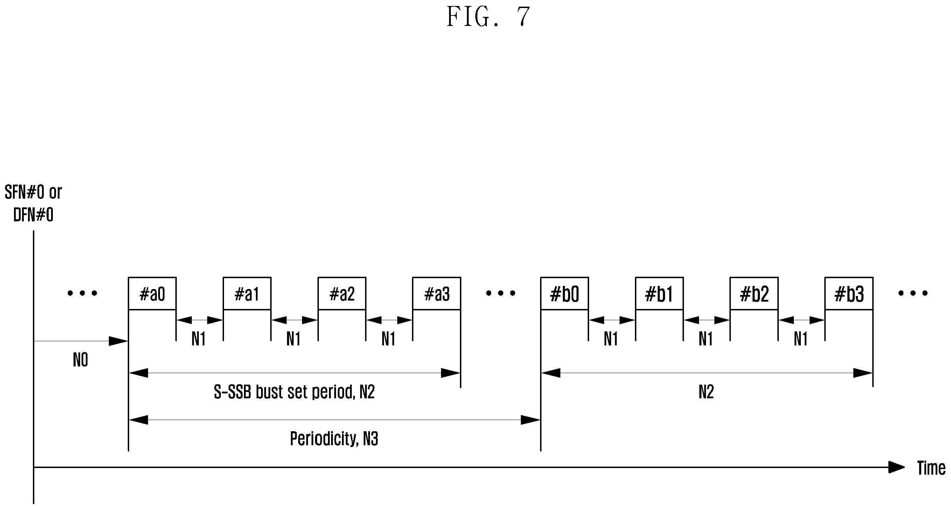

FIG. 7 is a diagram illustrating another method of transmitting a sidelink synchronization block according to an embodiment of the disclosure.

FIGS. 6A and 6B have illustrated that an S-SSB is transmitted once within S-SSB transmission periodicity. In contrast, a case where an S-SSB is transmitted twice or more within S-SSB transmission periodicity may be present. For example, if an S-SSB is transmitted in a hybrid beamforming system, the S-SSB may be transmitted by performing beam sweeping. That is, different S-SSBs may be transmitted in different beam directions. Furthermore, for example, if a subcarrier spacing is increased, coverage of an S-SSB may be reduced because power density is reduced. In such a case, the coverage problem may be solved by repeatedly transmitting the S-SSB in a time axis. More specifically, if it is assumed that an S-SSB is transmitted through M frequency blocks, the more a subcarrier spacing is increased x times, the less power density may be reduced x times. Accordingly, in such a case, the S-SSB may be repeatedly transmitted x times in the time axis.

By the aforementioned object, FIG. 7 illustrates a case where an S-SSB is transmitted four times within S-SSB transmission periodicity. FIG. 7 illustrates that the S-SSB is transmitted in slots spaced apart from an SFN No.0 or a DFN No.0 by a N0 slot (i.e., an offset value = N0). As described above, sidelink synchronization signal source UEs may start the transmission of the S-SSB in a slot spaced apart from the SFN No.0 or the DFN No.0 by the N0 slot. In this case, the S-SSB may be transmitted K times during a given interval. Such K-times transmission may be performed every S-SSB transmission periodicity. More specifically, as illustrated in FIG. 7, the S-SSB may be transmitted four times (K = 4) during an N2 interval in a slot spaced apart from the SFN No.0 or the DFN No.0 by the N0 slot. In FIG. 7, N2 has been illustrated as being different from N3, but N2 and N3 may have the same value unlike in FIG. 7. In FIG. 7, K = 4 has been assumed, but the disclosure may not be limited thereto. At least one of the K value and the N2 value may be configured by a base station or may be preconfigured. The K value and the N2 value may be identical with each other or different from each other depending on a carrier frequency band in which the S-SSB is transmitted or/and a subcarrier spacing (SCS) used in the S-SSB.

Meanwhile, an N1 value means an interval with an adjacent S-SSB, and may be identical or different depending on a carrier frequency band in which the S-SSB is transmitted or/and a subcarrier spacing used for the transmission of the S-SSB. For example, the N1 value may be configured to be great because beam sweeping is not required for a frequency range 1 (FR1) not a mmWave band. For coverage extension, beam sweeping may be necessary for an FR2 that includes a mmWave band. In such a case, in order to reduce latency in a synchronization procedure attributable to the beam sweeping, the N1 value may be configured to be small.

Furthermore, for example, sidelink synchronization signal source UEs may be configured with respect to the transmission of an S-SSB through a combination of N0, K, N2, and N3. More specifically, for S-SSB transmission, 15 kHz, 30 kHz, and 60 kHz subcarrier spacings may be used in the FR1. Furthermore, for S-SSB transmission, 60 kHz and 120 kHz subcarrier spacings may be used in the FR2. The subcarrier spacings that need to be used to transmit the S-SSB in the FR1 and FR2 may have an association relation with a frequency managed by a sidelink or may be configured through system information and RRC from a base station. If a base station is not present, a preconfigured value may be used or may be configured through PC5-RRC.

The transmission number (K) of an S-SSB may be configured in each subcarrier spacing through system information and RRC from a base station along with the subcarrier spacing. If a base station is not present, a preconfigured value may be used or may be configured through PC5-RRC. For example, if a 15 kHz subcarrier spacing is used in the FR1, K may be 1 (K = 1). If a 30 kHz subcarrier spacing is used in the FR1, K may be 1 or 2 (K = 1 or 2). If K = 2 is configured, an S-SSB may be repeatedly transmitted twice. If a 60 kHz subcarrier spacing is used in the FR1, K may be 1, 2, or 4 (K = 1, 2, or 4). If K = 2 or 4 is configured, an S-SSB may be repeatedly transmitted twice or four times, respectively. If a 60 kHz subcarrier spacing is used in the FR2, one value among K = 1, 2, 4, 8, 16, and 32 may be configured. As in the aforementioned examples, when the K is greater than 1, this may mean that an S-SSB is repeatedly transmitted by a corresponding number. If a 120 kHz subcarrier spacing is used in the FR2, one value among K = 1, 2, 4, 8, 16, 32, and 64 may be configured. As in the aforementioned examples, when the K is greater than 1, this may mean that an S-SSB is repeatedly transmitted by a corresponding number.

N3 may be always fixed to 160 ms. Furthermore, an N1 value may be configured through system information and RRC from a base station. If a base station is not present, a preconfigured value may be used or may be configured through PC5-RRC.

In FIG. 7, S-SSBs may be transmitted by using the same beam or may be transmitted by using different beams. For example, FIG. 7 illustrates that slot#a0, #a1, #a2, and #a3, and slot#b0, #b1, #b2, and #b3 are slots in which S-SSBs are transmitted. In this case, in FIG. 7, S-SSBs transmitted in the slot#a0, #a1, #a2, and #a3 may be different beams. Such different beams may be repeatedly transmitted in the slot#b0, #b1, #b2, and #b3 (i.e., the beam of the slot#a0 is transmitted in the slot#b0, the beam of the slot#a1 is transmitted in the slot#b1, etc.). Furthermore, for example, in FIG. 7, S-SSBs transmitted in the slot#a0, #a1, #a2, and #a3 may be the same beam. Beams different from the beams transmitted in the slot#a0, #a1, #a2, and #a3 may be used for S-SSB transmission in the slot#b0, #b1, #b2, and #b3.

FIGS. 8A and 8B are diagrams illustrating a method of transmitting a sidelink synchronization signal in sidelink communication according to an embodiment of the disclosure.

More specifically, FIG. 8A illustrates a method of transmitting, by a sidelink UE, a sidelink synchronization signal (S-SSB or SLSS) when the sidelink UE is disposed in coverage of a base station (in-coverage) and synchronized with a GNSS or the base station (gNB or eNB) or when the sidelink UE is disposed out of coverage of a base station (out-of-coverage) and synchronized with a GNSS. In contrast, FIG. 8B illustrates a method of transmitting, by a sidelink UE, a sidelink synchronization signal (S-SSB or SLSS) when the sidelink UE is disposed out of coverage of a base station (out-of-coverage) and synchronized with a synchronization signal transmitted by another sidelink UE. As illustrated in FIG. 8A, parameters related to the transmission of an S-SSB/PSBCH may be configured by configuration information (step 801). Thereafter, a UE may determine whether the UE is disposed in coverage of a base station (step 802). A sidelink UE disposed in coverage of the base station may be configured with parameters for transmitting an S-SSB by a base station through system information (SIB) or RRC signaling. Furthermore, a sidelink UE disposed out of coverage of a base station may be preconfigured with parameters for transmitting an S-SSB. The configured or preconfigured parameters may include at least one of ID information which may be applied by the sidelink UE in order to generate at least one sequence among demodulation reference signals (DMRSs) of a sidelink primary synchronization sequence (S-PSS), a sidelink secondary synchronization sequence (S-SSS), or a physical sidelink broadcast channel (PSBCH), a time resource for transmitting an S-SSB, or a frequency resource. The time resource for S-SSB transmission may include at least one of a radio frame, a subframe, or a slot in which the S-SSB is transmitted. More specifically, the sidelink UE may be configured with at least one piece of information among the offset value and the periodicity illustrated in FIGS. 6A and 6B. Furthermore, the sidelink UE may recognize a time resource in which the S-SSB is transmitted by being configured (or preconfigured) with at least one of the N0, N1, N2, and N3 values illustrated in FIG. 7. Meanwhile, the frequency resource for transmitting the S-SSB may mean a location of a frequency resource in which the S-SSB is transmitted.

As mentioned with reference to FIGS. 6A, 6B, and 7, a sidelink UE disposed in coverage of a base station may be configured with a maximum of one time resource for S-SSB transmission. However, a sidelink UE disposed out of coverage of a base station may be preconfigured with up to two or three resources for S-SSB transmission. If two resources for SLSS transmission are preconfigured, the two resources may be indicated through syncOffsetIndicator1 and syncOffsetIndicator2, respectively. If three resources for SLSS transmission are preconfigured, the three resources may be indicated through syncOffsetIndicator1, syncOffsetIndicator2, and syncOffsetIndicator3, respectively.

Thereafter, the sidelink UE disposed in coverage of the base station may determine whether to select a GNSS as a synchronization signal source (step 803). If the sidelink UE disposed in coverage of the base station has selected the GNSS as a synchronization signal source (i.e., this may mean a case where the sidelink UE disposed in coverage of the base station is directly synchronized with the GNSS, and may mean a case where the GNSS has higher priority than a gNB/eNB) and when a condition in which the corresponding sidelink UE has to transmit an S-SSB (or SLSS) is satisfied (e.g., if the corresponding sidelink UE has a capability capable of transmitting the SLSS, has been instructed to transmit the SLSS from the base station or has a capability capable of transmitting the SLSS and if downlink RSRP measured by the corresponding sidelink UE is smaller than a downlink RSRP critical value set by the base station through system information or RRC signaling), the sidelink UE may generate the SLSS by using a sidelink synchronization signal (SLSS) ID = 0. The sidelink UE may start to transmit the sidelink synchronization signal in a slot configured by the base station. More specifically, the sidelink UE may be configured with a start point of the slot where the sidelink synchronization signal is transmitted through a syncOffsetIndicator parameter transmitted by the base station through system information or RRC signaling. For example, the syncOffsetIndicator may mean N0 in FIG. 7. Accordingly, as illustrated in FIG. 8A, the sidelink UE may transmit the S-SSB generated by using the SLSS ID = 0 in the slot indicated by syncOffsetIndicator (step 804).

Meanwhile, if the sidelink UE disposed in coverage of the base station selects a gNB or an eNB as a synchronization signal source (i.e., this may mean a case where the sidelink UE disposed in coverage of the base station is directly synchronized with the gNB or the eNB, and may mean a case where the gNB/eNB has higher priority than a GNSS), and if a condition in which the corresponding sidelink UE has to transmit an S-SSB (or SLSS) is satisfied (e.g., if the corresponding sidelink UE has a capability capable of transmitting the SLSS, has been instructed to transmit the SLSS by the base station or has a capability capable of transmitting the SLSS and if downlink RSRP measured by the corresponding sidelink UE is smaller than a downlink RSRP critical value configured through system information or an RRC signal by the base station), the sidelink UE may generate the SLSS by using a sidelink synchronization signal (SLSS) ID = N. In this case, the N value may mean a cell ID of a cell in which the sidelink UE is disposed or may mean an ID configured by the base station. More specifically, if sidelink UEs in an RRC idle state with the base station may use an ID as an N value if information on the ID is included in system information. If the information on the ID is not included in the system information (i.e., if the ID has not been configured as the system information), the sidelink UE may replace, with an N value, a cell ID detected by the sidelink UE from a synchronization signal of the base station. Sidelink UEs in an RRC connected state with the base station may use, as an N value, an ID configured through RRC signaling from the base station. If a sidelink UE in the RRC connected state with the base station does not have an ID configured through RRC signaling from the base station, the sidelink UE may use an ID configured through system information, like the sidelink UE in the RRC idle state. In case that information on an ID is not included in system information (i.e., if the ID has not been configured as the system information), the sidelink UE may replace, with an N value, a cell ID detected by the sidelink UE from a synchronization signal of the base station.

The sidelink UE may be configured with a start point of a slot where the sidelink synchronization signal is transmitted through a syncOffsetIndicator parameter transmitted by the base station through system information or RRC signaling. For example, the syncOffsetIndicator may mean N0 in FIG. 7.

Accordingly, as illustrated in FIG. 8A, the sidelink UE may transmit the S-SSB generated by using the SLSS ID = N in the slot indicated by syncOffsetIndicator (step 805).

The aforementioned examples relate to a case where a UE that transmits a sidelink synchronization signal is in coverage of a base station. Likewise, if a UE that transmits a sidelink synchronization signal is out of coverage of a base station, the sidelink UE may operate as follows.

Furthermore, the sidelink UE disposed out of coverage of the base station may determine whether to select a GNSS as a synchronization signal source (step 806). If the sidelink UE has selected the GNSS as a synchronization signal source (i.e., if a sidelink UE disposed out of coverage of a base station is directly synchronized with a GNSS), the sidelink UE may generate an S-SSB by using a sidelink synchronization signal (SLSS) ID = 0. Meanwhile, as mentioned in FIGS. 6A and 6B, a sidelink UE disposed out of coverage of a base station may be preconfigured with two or three S-SSB transmission resources. If two resources for S-SSB transmission are preconfigured, the two resources may be indicated through syncOffsetIndicator 1 and syncOffsetIndicator2, respectively (refer to FIG. 6B). If three resources for S-SSB transmission are preconfigured, the three resources may be indicated through syncOffsetIndicator1, syncOffsetIndicator2, and syncOffsetIndicator3, respectively.

As illustrated in FIG. 8A, a case where a sidelink UE is disposed out of coverage of a base station, has selected a GNSS as a synchronization signal source (i.e., if a sidelink UE disposed out of coverage of a base station is directly synchronized with a GNSS) and has been preconfigured with three resources for S-SSB transmission may be present. In this case, the UE may select an SLSS ID = 0 (step 807). Thereafter, the UE may determine whether syncOffsetIndicator3 has been configured (step 808). The UE configured with syncOffsetIndicator3 may transmit the S-SSB by using the SLSS ID = 0 in a No.3 S-SSB transmission resource (i.e., a resource indicated through syncOffsetIndicator3) (step 809). In this case, the sidelink UE may not transmit the S-SSB in the remaining two S-SSB transmission resources (i.e., the first and second S-SSB transmission resources or S-SSB resources indicated through syncOffsetIndicator1 and syncOffsetIndicator2).

In contrast, a case where a sidelink UE is disposed out of coverage of a base station, has selected a GNSS as a synchronization signal source (i.e., if a sidelink UE disposed out of coverage of a base station is directly synchronized with a GNSS), and has not been preconfigured with three resources for S-SSB transmission may be present (i.e., if two resources for S-SSB transmission have been preconfigured). In such a case, the sidelink UE may transmit the S-SSB by using an SLSS ID = 0 in the first S-SSB transmission resource (i.e., an S-SSB resource indicated through syncOffsetIndicator1) (step 810). In this case, the sidelink UE may not transmit the S-SSB in the remaining one S-SSB transmission resource (i.e., the second S-SSB transmission resource or an S-SSB resource indicated through syncOffsetIndicator2). The sidelink UE may transmit the S-SSB in an S-SSB resource indicated through the syncOffsetIndicator (step 811).

Meanwhile, as illustrated in FIG. 8A, if a sidelink UE is disposed out of coverage of a base station and does not select a GNSS as a synchronization signal source (i.e., if a sidelink UE disposed out of coverage of a base station is directly synchronized with a GNSS), the sidelink UE may perform the operation illustrated in FIG. 8B. That is, a sidelink UE that is disposed out of coverage of a base station and that does not select a GNSS as a synchronization signal source may select another sidelink UE as a synchronization signal source based on the priorities described with reference to FIG. 4 (step 821). In this case, as illustrated in FIG. 8B, an operation of the sidelink UE may be different depending on a condition B (step 822). More specifically, if the sidelink synchronization signal source UE selected by the sidelink UE is in coverage of the base station (i.e., if an in-coverage indicator is configured as On or configured as True in a PSBCH transmitted by the sidelink synchronization signal source UE), the sidelink UE may generate an SLSS by using the same SLSS ID as an SLSS ID used by the sidelink synchronization signal source UE (step 823). The generated SLSS may be transmitted in a preconfigured S-SSB resource. That is, if an S-SSB resource is indicated through syncOffsetIndicator1 in a preconfigured S-SSB parameter, the sidelink UE may transmit the S-SSB in the first S-SSB resource. Furthermore, if an S-SSB resource is indicated through syncOffsetIndicator2 in a preconfigured S-SSB parameter, the sidelink UE may transmit the S-SSB in the second S-SSB resource (step 823). The aforementioned operation may mean a case where a sidelink UE disposed out of coverage of a base station selects, as a synchronization signal source, a sidelink UE disposed in coverage of the base station.

Meanwhile, the sidelink UE disposed out of coverage of the base station may determine whether an SLSS received from another sidelink UE has been received in an S-SSB resource indicated by syncOffsetIndicator3 (step 824). If the SLSS received from the another sidelink UE has been received in the S-SSB resource indicated by syncOffsetIndicator3, the sidelink UE disposed out of coverage of the base station may generate an SLSS sequence by using an SLSS ID = 169. The generated SLSS may be transmitted in an S-SSB resource indicated by syncOffsetIndicator2 (step 825). The aforementioned operation may mean a case where a sidelink UE disposed out of coverage of a base station selects, as a synchronization signal source, a sidelink UE directly synchronized with a GNSS out of coverage of the base station.

In addition to a case where a sidelink UE disposed out of coverage of the aforementioned base station is synchronized with an S-SSB transmitted by a sidelink UE that is directly synchronized with the base station and that is disposed in coverage of the base station or a case where the sidelink UE disposed out of coverage of the base station is synchronized with an S-SSB transmitted by a sidelink UE directly synchronized with a GNSS out of coverage of the base station, a sidelink UE that has selected the sidelink UE as a synchronization signal source may perform the following operation. That is, a UE may determine whether to select the selected sidelink UE as a synchronization signal source (step 826). A sidelink UE disposed out of coverage of the base station may generate an SLSS ID to be transmitted by the sidelink UE by adding 168 to the SLSS ID of a sidelink synchronization signal source UE, which has been received by the sidelink UE (step 827). The generated SLSS may be transmitted in a preconfigured S-SSB resource. That is, if an S-SSB resource is indicated through syncOffsetIndicator1 in a preconfigured S-SSB parameter, the sidelink UE may transmit the S-SSB in the first S-SSB resource. Furthermore, if an S-SSB resource is indicated through syncOffsetIndicator2 in a preconfigured S-SSB parameter, the sidelink UE may transmit the S-SSB in the second S-SSB resource (step 827).

Meanwhile, if the sidelink UE disposed out of coverage of the base station is not selected as a sidelink synchronization signal source (i.e., if a sidelink synchronization signal source with which synchronization will be performed is not present), the sidelink UE may autonomously play a role as a sidelink synchronization signal source. That is, the sidelink UE may transmit a synchronization signal so that adjacent sidelink UEs can perform synchronization with the sidelink UE. In this case, the sidelink UE may generate an SLSS by randomly selecting one ID from an ID set of {170, 171, ..., 334, 335} except an SLSS ID = 168 and 169 (step 828). The generated SLSS may be transmitted in a preconfigured S-SSB resource. That is, in case that an S-SSB resource is indicated through syncOffsetIndicator1 in a preconfigured S-SSB parameter, the sidelink UE may transmit the S-SSB in the first S-SSB resource. Furthermore, if an S-SSB resource is indicated through syncOffsetIndicator2 in a preconfigured S-SSB parameter, the sidelink UE may transmit the S-SSB in the second S-SSB resource (step 828). The sidelink UE may transmit the S-SSB in an S-SSB resource indicated by the syncOffsetIndicator (step 829).

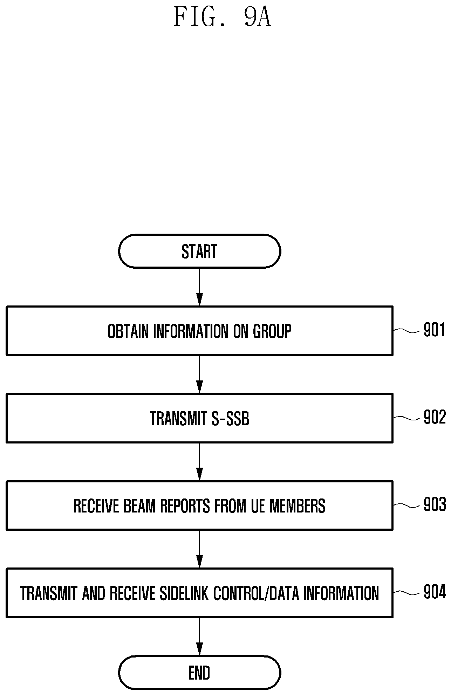

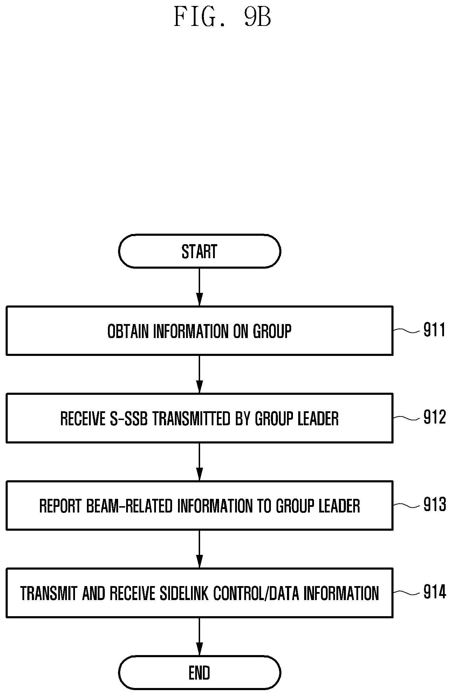

FIGS. 9A and 9B are diagrams illustrating a method of obtaining beam information between a transmission UE and a reception UE in sidelink communication according to an embodiment of the disclosure.

More specifically, FIG. 9A illustrates an operation of a group leader (or a group header) having a function or the ability capable of controlling group members in group communication. In this case, the function or ability capable of controlling group members may include an operation of allocating or configuring time/frequency/code resources of group members. In contrast, FIG. 9B illustrates an operation of group members except a group leader.

In FIG. 9A, a group leader may obtain information on a group from a higher layer thereof (step 901). In this case, the information on the group may include at least one of information indicating that a corresponding UE is a leader of a group, the number of UEs participating in group communication, and group IDs capable of identifying respective UEs within the group. A UE that has received the information indicating that the UE is a leader of a group from the higher layer may recognize that the UE is a group leader of the corresponding group communication. The group leader that has recognized that the UE is a group leader may transmit an S-SSB by using one of the methods described with reference to FIGS. 6A, 6B, and FIG. 7. In this case, the S-SSB transmitted by the group leader may be transmitted by using a sequence different from that of an S-SSB transmitted by a sidelink synchronization signal source UE. For example, a group ID of the illustrated group leader may be used in the S-SSB transmitted by the group leader. Alternatively, an ID used to generate the S-SSB sequence of the group leader and an ID used to generate the S-SSB sequence transmitted by the sidelink synchronization signal source UE may be different from each other. Furthermore, for example, a set of sequences used in the S-SSB transmitted by the sidelink synchronization signal source UE and a set of sequences used in the S-SSB transmitted by the group leader may be different from each other. Furthermore, for example, an ID to identify whether an S-SSB is the S-SSB transmitted by the group leader may be included in a PSBCH.

The group leader may transmit an S-SSB by using one of the beam sweeping methods described with reference to FIG. 7 (step 902). Each of the group members that have received the S-SSB may measure reference signal received power (RSRP) of the S-SSB received from the group leader. Each group member may transmit a value of the measured RSRP and an index of a beam to the group leader (step 903). In this case, each group member may transmit, to the group leader, N beam indices that provide the highest RSRP value and N RSRP values corresponding thereto ($N \geq 1$). In this case, information on the N beams (N beam indices and N RSRP values) may be transmitted through a sidelink data channel (physical sidelink shared channel (PSSCH)) or a sidelink feedback channel (physical sidelink feedback channel (PSFCH)). A case where the information on the N beams is transmitted through the PSSCH may include a case where the information is transmitted through a MAC CE. If the N value is configured in resource pool information and the UE is in coverage of a base station, the N value may be configured through system information or RRC signaling from the base station. If the UE is out of coverage of the base station, the N value may be preconfigured.

Meanwhile, when each group member transmits the information on the N beams to the group leader through the PSSCH or the PSFCH, a beam direction of the PSSCH or PSFCH transmitted by each group member may have an association relation with a beam direction of the S-SSB received by each group member. Such an association relation is information that needs to be recognized by all of the UEs (the group leader and the group members) that perform group communication, and may be provided from a higher layer of each UE when the forming of a group is performed (e.g., PC5-RRC). Furthermore, for example, the association relation may be configured through system information or RRC of the base station in coverage of the base station or may be preconfigured out of coverage of the base station. The group leader that has obtained preferred beam information (a beam index and RSRP of a corresponding beam) from the group members may transmit or receive sidelink control information and data information in a beam direction preferred by each group member (step 904).

FIG. 9B illustrates an operation of group members. Each of the group members may obtain information on a group from a higher layer thereof (step 911). In this case, the information on the group may include at least one of information indicating that a corresponding UE is not a leader of the group (i.e., information indicating that the corresponding UE is a group member), the number of UEs participating in group communication, and group IDs capable of identifying respective UEs within the group. A UE that has received the information indicating that the UE is a member of the group from a higher layer may recognize that the UE is a group member in the corresponding group communication. The group member that has recognized that the UE is a group member may receive an S-SSB transmitted by a group leader (step 912). In this case, the S-SSB transmitted by the group leader may be transmitted by using a sequence different from that of an S-SSB transmitted by a sidelink synchronization signal source UE. For example, a group ID of the illustrated group leader may be used in the S-SSB transmitted by the group leader. Alternatively, an ID used to generate the S-SSB sequence of the group leader and an ID used to generate the S-SSB sequence transmitted by the sidelink synchronization signal source UE may be different from each other. Furthermore, for example, a set of sequences used in the S-SSB transmitted by the sidelink synchronization signal source UE and a set of sequences used in the S-SSB transmitted by the group leader may be different from each other. Furthermore, for example, an ID to identify whether an S-SSB is the S-SSB transmitted by the group leader may be included in a PSBCH.

The group members may identify the S-SSB transmitted by the group leader and the S-SSB transmitted by the sidelink synchronization signal source by using at least one of the embodiments. In this case, the S-SSB transmitted by the group leader may have higher priority than an S-SSB transmitted by another synchronization signal source. Each group member may perform a procedure for performing synchronization with the S-SSB transmitted by the group leader and obtaining a beam. More specifically, the group leader may transmit an S-SSB by using one of the beam sweeping methods described with reference to FIG. 7. Each of the group members that have received the S-SSB may measure RSRP of the S-SSB received from the group leader. Each group member may transmit a value of the measured RSRP and an index of the beam to the group leader (step 913). In this case, each group member may transmit, to the group leader, N beam indices that provide the highest RSRP value and N RSRP values corresponding thereto ($N \geq 1$). In this case, information on the N beams (N beam indices and N RSRP values) may be transmitted through a sidelink data channel (physical sidelink shared channel (PSSCH)) or a sidelink feedback channel (physical sidelink feedback channel (PSFCH)). A case where the information on the N beams is transmitted through the PSSCH may include a case where the information is transmitted through a MAC CE. If the N value is configured in resource pool information and the UE is in coverage of a base station, the N value may be configured through system information or RRC signaling from the base station. If the UE is out of coverage of the base station, the N value may be preconfigured.

Meanwhile, when each group member transmits the information on the N beams to the group leader through the PSSCH or the PSFCH, a beam direction of the PSSCH or PSFCH transmitted by each group member may have an association relation with a beam direction of the S-SSB received by each group member. Such an association relation is information that needs to be recognized by all of the UEs (the group leader and the group members) that perform group communication, and may be provided from a higher layer of each UE when the forming of a group is performed (e.g., PC5-RRC). Furthermore, for example, the association relation may be configured through system information or RRC of the base station in coverage of the base station or may be preconfigured out of coverage of the base station.

The group leader that has obtained preferred beam information (a beam index and RSRP of a corresponding beam) from the group members may transmit or receive sidelink control information and data information in a beam direction preferred by each group member. Likewise, each group member may receive or transmit sidelink control information and data information in the beam direction reported to the group leader by each member (step 914).

The aforementioned examples have been chiefly described by taking groupcast communication as an example, but may be similarly applied to unicast communication. Meanwhile, since groupcast communication may have a hierarchical structure as in a group leader and a group member, a group leader may perform a role of controlling group members. However, in unicast communication, since a transmission UE and a reception UE may have the same level, it may be difficult to perform a procedure of obtaining a beam (i.e., in a process of obtaining a beam, the subject of beam report and beam allocation is not present).

Meanwhile, in the aforementioned method of obtaining a beam, the time that is taken for group members to obtain beam information may be increase as the number of managed beams and the number of group members are increased. That is, latency may occur until sidelink control information and data information can be transmitted and received by using a preferred beam. In particular, although information on a preferred beam has been obtained by the aforementioned method of obtaining a beam, if the beam is changed by beam blocking, etc., the aforementioned procedure of obtaining a beam may need to be performed again. Accordingly, the aforementioned method of obtaining a beam has disadvantages in that sidelink communication may be delayed and signaling overhead for obtaining beam information may be increased.

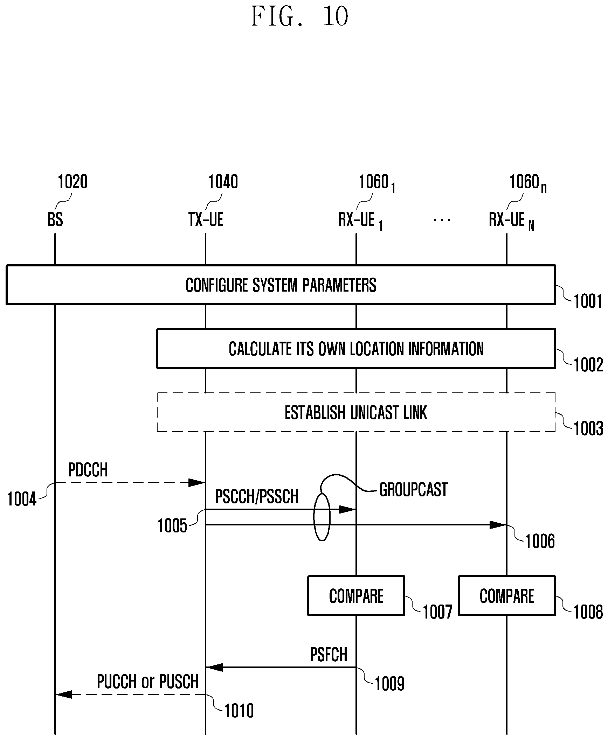

FIG. 10 is a diagram illustrating a distance-based HARQ operation in sidelink communication according to an embodiment of the disclosure.

In FIG. 10, a transmission UE 1040 and reception UEs 1060n may receive system information for sidelink communication from a base station 1020. Parameters for sidelink communication may be configured in the UEs that have received the system information (step 1001). If the transmission UE 1040 and the reception UEs 1060n are out of coverage of the base station 1040 (an out-of-coverage scenario), the transmission UE 1040 and the reception UEs 1060n may be preconfigured with the parameters for sidelink communication or may be configured with the parameters for sidelink communication through a sidelink master information block (sidelink SL-MIB) transmitted through a sidelink synchronization channel (S-SSB). A unicast link configuration procedure between the transmission UE 1040 and each of the reception UEs 1060n may be performed (step 1003).

FIG. 10 is a method for sidelink HARQ management in a groupcast communication scenario performed without PC5 RRC connection setup. Accordingly, a unicast link configuration procedure between the transmission UE 1040 and the reception UEs 1060n may be omitted. However, the HARQ management method of FIG. 10 may also be applied to a case where a unicast link configuration procedure between the transmission UE 1040 and the reception UEs 1060n is performed. Such a scenario may include the unicast link configuration procedure illustrated in FIGS. 8A and 8B. Furthermore, in FIGS. 8A and 8B, the unicast link configuration procedure has been illustrated as being performed after system parameter configuration information of a base station is received, but the unicast link configuration procedure may be first performed and the system parameter configuration information may be then received. If a base station is not present, a parameter for sidelink communication may be configured through an SL-MIB after the unicast link configuration procedure is performed.

In FIG. 10, the transmission UE 1040 and the reception UEs 1060n may calculate their location information (step 1002). In this case, the location information may mean the ID of a zone including a UE or may mean (x, y) coordinates of a UE calculated through the latitude and longitude of a UE, but the disclosure is not limited thereto.

If the mode-1 resource allocation method described with reference to FIGS. 2A and 2B is used in FIG. 10, the base station may transmit sidelink scheduling information to the groupcast transmission UE 1040 through a physical downlink control channel (PDCCH) (step 1004). The transmission UE 1040 that has received the sidelink scheduling information through the PDCCH may transmit sidelink control information and data information to the reception UEs 1060n by using the scheduling information (step 1005 and step 1006). In this case, a destination L1 ID and a source L1 ID may be transmitted by being included in the sidelink control information. Furthermore, the sidelink control information may include 1-bit information indicating whether to activate or deactivate HARQ management. More specifically, although PSFCH resource configuration information (e.g., the periodicity of a PSFCH) for HARQ management is included in resource pool configuration information, the transmission UE 1040 may deactivate HARQ management by including, in SCI, information indicative of the deactivation of the HARQ management. The reason for this is as follows.

In the case of broadcast communication, HARQ management may be difficult in broadcast communication because sidelink control information and data information are transmitted to multiple unspecified UEs. In the case of unicast and groupcast communication, HARQ management may be configured or may not be configured based on QoS of transmitted sidelink data. For example, HARQ management may be configured for specific sidelink data because the specific sidelink data has high requirements for reception reliability. However, HARQ management may not be configured for specific sidelink data because the specific sidelink data does not have high requirements for reception reliability. Furthermore, for example, HARQ management may not be configured for specific sidelink data because the specific sidelink data has high requirements for the delay of sidelink communication (i.e., delay needs to be short). However, HARQ management may be configured for specific sidelink data because the specific sidelink data has low requirements for delay (i.e., the delay may be long). As described above, HARQ management may be configured or a configuration of HARQ management may be released based on QoS of sidelink data transmitted by the transmission UE 1040. Whether to configure such HARQ management may be performed in a sidelink layer that receives QoS from an application layer or application that manages the QoS because it may be different based on the QoS.

However, in such a case, HARQ management of a reception UE may be impossible. More specifically, HARQ management needs to be performed in a PHY/MAC layer. If a V2X layer, an application layer, etc. controls the HARQ management, the PHY/MAC layer of the reception UE cannot perform the HARQ management. That is, the PHY/MAC layer of the reception UE needs to recognize whether to perform HARQ management before the PHY/MAC layer delivers a corresponding packet to the V2X layer or application layer of the reception UE, and the PHY layer may perform the HARQ combining based on such recognition. Accordingly, for such HARQ management of the PHY/MAC layer, the transmission UE 1040 may include a 1-bit indicator indicating whether to manage an HARQ through SCI.

Meanwhile, as mentioned with reference to FIGS. 2A and 2B, the mode-2 resource allocation method may be used in FIG. 10. In such a case, an operation of receiving, by the transmission UE 1040, scheduling information from the base station through a PDCCH may be omitted from FIG. 10.

The transmission UE 1040 may transmit, through a PSCCH, its own location information and a range requirement for a sidelink data packet transmitted by the transmission UE by including the location information and the range requirement in the SCI along with the aforementioned information. The range requirement is not limited to a case where the range requirement is received through the SCI, and may include using a value preconfigured in the UE or using a value configured by the base station. The aforementioned location information of the transmission UE 1040 may mean the ID of a zone where the transmission UE 1040 is disposed or may mean (x, y) coordinates of the transmission UE 1040 calculated through the latitude and longitude of the transmission UE 1040, but the disclosure is not limited thereto. Furthermore, the aforementioned range requirement may be represented as the unit of a meter, and may mean information on a distance in which a sidelink data packet needs to be transmitted. For example, the range requirement may mean at least one of a maximum or minimum distance in which a sidelink data packet needs to be transmitted.

Each of the reception UEs 1060n that has received the PSCCH and the PSSCH from the transmission UE 1040 may determine whether a destination L1 ID included in the SCI denotes a corresponding reception UE, and may decode the PSSCH based on time and/or frequency resource allocation information of the PSSCH included in the SCI when the destination L1 ID denotes the corresponding reception UE. Based on the decoding of the PSSCH, each reception UE may finally determine whether sidelink data is transmitted thereto based on a destination L2 ID that is included in a MAC-CE transmitted through the PSSCH. That is, the aforementioned destination L2 ID consists of N bits. An N1 bit may be transmitted through the SCI (destination L1 ID), and the remaining N2 bits may be transmitted through the MAC-CE (N = N1 + N2). If it is determined that the destination L1 ID included in the received SCI does not denote a corresponding reception UE, the reception UE may not decode the PSSCH denoted by the corresponding SCI.

When the PSCCH and the PSSCH transmitted by the transmission UE 1040 denotes the destination L2 ID of a corresponding reception UE, the reception UE may calculate its distance from the transmission UE 1040 based on its own location information and the location information of the transmission UE 1040 included in the SCI information received from the transmission UE 1040. In this case, the distance between the transmission UE 1040 and the reception UE-N is defined as $d_N$. Furthermore, the reception UE may compare values $d_{TH}$ and $d_N$ based on a range requirement (defined as $d_{TH}$) included in the received SCI information (step 1007 and step 1008). The reception UE may perform an HARQ operation based on a result of the comparison between the values $d_{TH}$ and $d_N$. For example, when the distance between the transmission UE 1040 and the reception UE, which is measured (calculated or obtained) by the reception UE is greater than (or greater than or equal to) the range requirement, the reception UE may not transmit HARQ feedback information to the transmission UE 1040 regardless of whether the decoding of the PSSCH received by the reception UE is successful. That is, when $d_N > d_{TH}$ (or $d_N \geq d_{TH}$), the reception UE may not perform HARQ feedback. In contrast, when $d_N \leq d_{TH}$ (or $d_N < d_{TH}$), the reception UE may transmit HARQ feedback to the transmission UE 1040. Furthermore, the reception UE may transmit HARQ-NACK to the transmission UE 1040 only when the decoding of the PSSCH fails. That is, although the aforementioned distance condition is satisfied, when the decoding of the PSSCH is successful, the reception UE may not transmit HARQ-ACK to the transmission UE 1040. The reception UE-1 may transmit HARQ-NACK to the transmission UE 1040 through a PSFCH (step 1009). FIGS. 8A and 8B are an example of a case where the reception UE-1 transmits HARQ-NACK to the transmission UE 1040 through a PSFCH.

If two or more reception UEs satisfy the aforementioned condition (i.e., $d_N \leq d_{TH}$ or $d_N < d_{TH}$) and fail in the decoding of the PSSCHs, the two or more reception UEs may transmit HARQ-NACK to the transmission UE 1040. In this case, times/frequencies/code resources of the PSFCHs used for the transmission of HARQ-NACK by the two or more reception UEs may be the same. Accordingly, the transmission UE 1040 that has received the HARQ feedback information does not need to be aware how many reception UEs have transmitted NACK information. The transmission UE 1040 that has received the NACK information may perform the retransmission of the PSSCH. If the transmission UE 1040 does not receive NACK information and sidelink data to be newly transmitted occurs, the transmission UE 1040 may transmit a new PSSCH. If sidelink data to be newly transmitted does not occur, the transmission UE 1040 may stop a PSSCH transmission operation.

Meanwhile, as illustrated in FIG. 10, the transmission UE 1040 may transmit, to the base station, sidelink HARQ feedback information received from the reception UE based on a configuration of the base station. In this case, the sidelink HARQ feedback information may be transmitted through a PUCCH or may be transmitted through a PUSCH (step 1010).

Whether common sidelink HARQ management will be used or the distance-based sidelink HARQ management illustrated in FIGS. 8A and 8B will be used in groupcast communication may be included in resource pool configuration information configured by the base station or may be included in preconfigured resource pool configuration information if the base station is not present. Furthermore, for example, the transmission UE 1040 may implicitly or explicitly indicate whether to apply FIG. 10 through SCI. As an example of implicit indication, if the aforementioned location information of the transmission UE 1040 and the range requirement information are included in the SCI, the reception UE may indirectly recognize that the method of FIG. 10 needs to be used. If the aforementioned location information of the transmission UE 1040 and the range requirement information are not included in the SCI, the reception UE may implicitly recognize that a common sidelink HARQ management method needs to be used. As an example of explicit indication, the transmission UE 1040 may transmit a 1-bit indicator by including the 1-bit indicator in the SCI. The UE that has received the SCI may apply the common HARQ method in case that the aforementioned indicator indicates "1", and may apply the method of FIG. 10 in case that the aforementioned indicator indicates "0." The UE that has received the SCI may be configured to apply the common method in case that the aforementioned indicator indicates "0" and apply the method of FIG. 10 in case that the aforementioned indicator indicates "1", depending on a configuration.

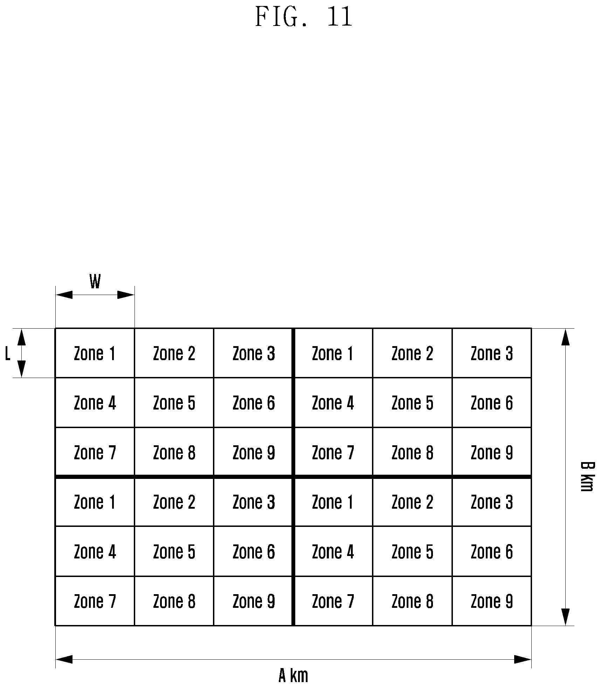

FIG. 11 is a diagram illustrating a method of using a zone ID in sidelink communication according to an embodiment of the disclosure.

A base station may transmit, through sidelink system information, zone configuration information to a sidelink UE within a cell thereof through an *SL-ZoneConfig* information element (IE). The aforementioned *SL-ZoneConfig* IE may include a *zoneWidth* parameter indicative of the width (W in FIG. 11) of a zone, a *zoneLength* parameter indicative of the length (L in FIG. 11) of the zone, a *zoneIdLongiMod* parameter indicating a total of how many zones are constructed on the basis of longitude, and a *zoneIdLatiMode* parameter indicating a total of how many zones are constructed on the basis of latitude. Each of the *zoneWidth* and *zoneLength* parameters may be configured as one value among 5 m, 10 m, 20 m, 50 m, 100 m, 200 m, and 500 m. Furthermore, each of the parameters *zoneIdLongiMod* and *zoneIdLatiMode* may be configured as an integer from 1 to 4.

That is, in FIG. 11, how many zones may be constructed in an area constructed as a width A km and a height B km based on the sizes of the width and height of each zone and the (A x B) km may be configured by using the parameters within the *SL-ZoneConfig* IE configured by a base station (the zones may be preconfigured when a base station is not present).

Meanwhile, if a base station configures two or more sidelink transmission resource pools (if two or more sidelink transmission resource pools are preconfigured when a base station is not present), a zone ID may be included in the configured transmission resource pool information. For example, if two sidelink transmission resource pools are configured by a base station (or if the two sidelink transmission resource pools are preconfigured), a transmission resource pool 1 may be zone ID = 3, and a transmission resource pool 2 may be zone ID = 7. A UE may calculate information on a zone ID to be used by the UE through [Equation 1] below, and may use a transmission resource pool in which the zone ID calculated by the UE and the zone ID included in the resource pool information configured by the base station (or a zone ID included in preconfigured resource pool information) are the same.

$$[\text{Equation 1}]$$
$$x1 = \text{Floor } (x / L) \text{ Mod } Nx;$$
$$y1 = \text{Floor } (y / W \text{ Mod } Ny;$$
$$\text{Zone ID} = y1 * Nx + x1$$

In [Equation 1], L and W are parameters corresponding to the aforementioned *zoneLength* and *zoneWidth*, respectively. Nx and Ny are parameters corresponding to the aforementioned *zoneIdLongiMod* and *zoneIdLatiMode*, respectively. Furthermore, x may mean a difference between (x, y) coordinates (0, 0), that is, a reference point, and a current longitude location of the UE on the basis of the (x, y) coordinates (0, 0). Y may mean a difference between (x, y) coordinates (0, 0), that is, a reference point, and a current latitude location of the UE on the basis of the (x, y) coordinates (0, 0). In this case, the reference point (0, 0) is coordinates that are the only one in the world. For example, the location of the Greenwich Observatory may be considered as the reference point (0, 0).

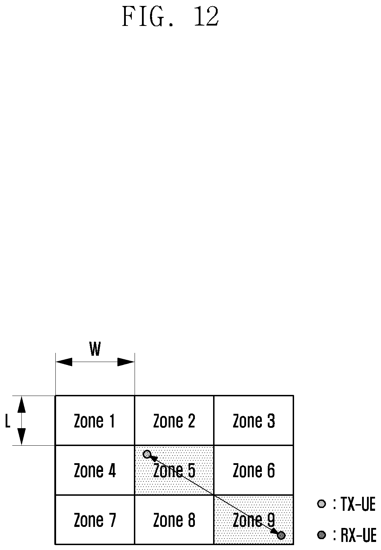

FIG. 12 is a diagram illustrating a problem with distance-based HARQ management in sidelink communication according to an embodiment of the disclosure.

If a reception UE estimates its distance based on a zone ID of a transmission UE and determines whether to transmit HARQ-NACK feedback based on a comparison between the distance and a range requirement, the reception UE may measure the distance between the transmission UE and the reception UE based on its current location and the zone ID information received from the transmission UE. In this case, as illustrated in FIG. 12, ambiguity may occur in the measurement of the distance between the transmission UE and the reception UE. For example, it is assumed that the transmission UE transmits its own zone ID = 5 to the reception UE through SCI information. In this case, the transmission UE may be disposed in the northwest of a zone 5 as illustrated in FIG. 12. However, since the reception UE is unaware of an accurate location of the transmission UE, the reception UE may require the assumption of the location of the transmission UE in the corresponding zone in order to calculate the distance.

For example, the reception UE may assume that the transmission UE is disposed in a central part of the corresponding zone in the zone ID = 5. Furthermore, for example, the reception UE may assume that an apex, that is, the farthest distance of the zone where the transmission UE is disposed from its own location, is a location of the transmission UE. More specifically, it is assumed that four apexes of the zone 5 have coordinates (a1, b1), (a2, b2), (a3, b3), and (a4, b4), respectively. Furthermore, it is assumed that a location of the reception UE is (x, y). In this case, the reception UE may calculate a distance from each of the four apex coordinates based on the coordinates of the four apexes and (x, y), that is, its own coordinates, and may assume, as the location of the transmission UE, apex coordinates having the longest distance. The aforementioned example may be applied as an apex having the shortest distance. That is, the reception UE may assume, as the location of the transmission UE, an apex having the closest (or shortest) apex of the zone where the transmission UE is disposed from its own location.

Furthermore, for example, the reception UE may assume, as the location of the transmission UE, an average of the closest apex and farthest apex of the zone from its own location. Alternatively, the reception UE may assume, as the location of the transmission UE, an average of the remaining two apexes except the closest apex and the farthest apex from its own location.

Furthermore, for example, the reception UE may assume the location of the transmission UE by moving coordinates of a zone where the reception UE is disposed to the zone where the transmission UE is disposed in parallel. For example, a case where the transmission UE is disposed in the zone 5 and the reception UE is disposed in the zone 9 as in FIG. 12 is assumed. Furthermore, it is assumed that W = 50 m and L = 10 m. The reception UE may assume that the transmission UE is disposed at (x - 50, y - 10) on the basis of (x, y), that is, its own location in the zone 9.

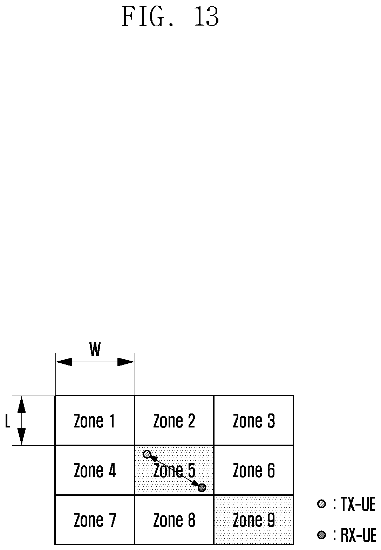

FIG. 13 is another diagram illustrating a problem with distance-based HARQ management in sidelink communication according to an embodiment of the disclosure.

FIG. 12 illustrates a case where a transmission UE and a reception UE are disposed in different zone. FIG. 13 illustrates a case where a transmission UE and a reception UE are disposed in the same zone. As described with reference to FIG. 12, the reception UE may assume that the transmission UE is disposed at the center of the zone, and may calculate the distance. Furthermore, for example, the reception UE may assume that the transmission UE is disposed at the closest apex (or the farthest apex) on the basis of (x, y), that is its own location, and may calculate the distance. Furthermore, for example, the reception UE may assume that the transmission UE is disposed at a point having an average value of the closest apex and the farthest apex on the basis of (x, y), that is its own location, and may calculate the distance. Alternatively, the reception UE may assume an average of the remaining two apexes except the closest apex and the farthest apex from its own location as the location of the transmission UE.

Furthermore, for example, the distance between the transmission UE and reception UE having the same zone ID may be assumed as 0. In such a case, the reception UE may assume that a distance requirement with the transmission UE is always satisfied, and may not perform the calculation of a distance from the transmission UE.

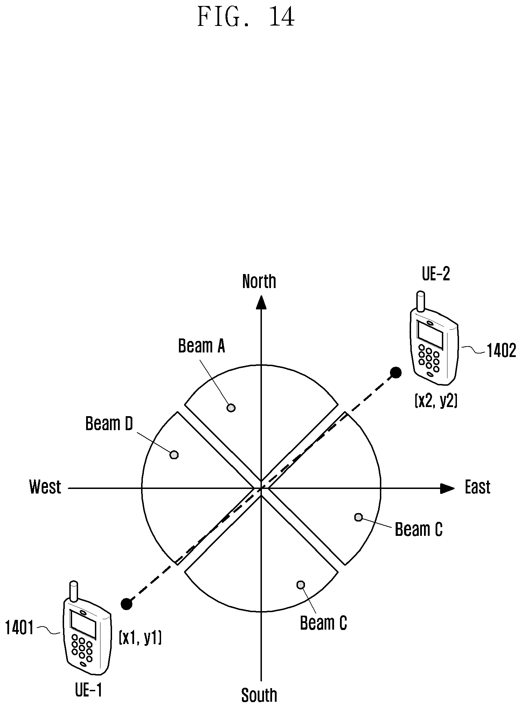

FIG. 14 is a diagram illustrating a method of obtaining a beam in sidelink communication according to an embodiment of the disclosure.

As described with reference to FIGS. 9A and 9B, in order to reduce an increase of unnecessary signaling overhead and the time consumed to obtain a beam between a transmission UE and reception UEs, a method of obtaining a beam based on a location, which is illustrated in FIG. 14, may be taken into consideration. In this case, a location of a sidelink UE may mean a zone ID or (x, y, z) coordinates or (x, y) coordinates including latitude and longitude of a UE, which has been described with reference to FIGS. 11, 12, and 13.

FIG. 14 illustrates that each of a sidelink UE-1 1401 and a sidelink UE-2 1402 manages four beams, but the disclosure is not limited thereto. Furthermore, FIG. 14 has illustrated that a beam-A is formed by using the north as a main direction, a beam-B is formed by using the east as a main direction, a beam-C is formed by using the south as a main direction, and a beam-D is formed by using the west as a main direction. Both the UE-1 1401 and the UE-2 1402 may form the beam-A, the beam-B, the beam-C, and the beam-D, and may exchange location information by using at least one of the methods illustrated in FIGS. 11, 12, and 13. In FIG. 14, the UE-1 1401 that has received location information of the UE-2 may be aware that the UE-2 1402 is disposed in the northeast of the UE-1 1401. Furthermore, since the UE-2 1402 is closer to the east than to the north, the UE-1 1401 may determine that it is preferred to use the beam-B for the UE-2 1402. Meanwhile, in FIG. 14, the UE-2 1402 that has received location information of the UE-1 1401 may be aware that the UE-1 1401 is disposed in the southwest of the UE-2 1402. Furthermore, since the UE-1 1401 is closer to the west than to the south, the UE-2 1402 may determine that it is preferred to use the beam-D for the UE-1 1401.

In the example, each sidelink UE has formed a beam having a fixed direction, and has transmitted or received sidelink control information and data information in the most appropriate beam direction based on locations of a sidelink transmission UE and a sidelink reception UE with which sidelink communication is to be performed. In contrast, a method of first calculating or measuring locations of a sidelink transmission UE and a sidelink reception UE and forming a beam in the direction in which the sidelink transmission UE and the sidelink reception UE are disposed may be taken into consideration. That is, in FIG. 14, if the UE-1 1401 is assumed as the sidelink transmission UE and the UE-2 1402 is assumed as the sidelink reception UE, the UE-1 1401 may form a transmission beam in the direction of the UE-2 1402, and the UE-2 1402 may form a reception beam in the direction of the UE-1 1401.

In the aforementioned examples, a method of selecting a beam direction based on a location of a reception UE or forming a beam in the direction of the reception UE on the assumption that one transmission UE and one reception UE are present has been described, but the disclosure is not limited thereto. For example, in groupcast communication constructed as one sidelink transmission UE and two or more sidelink reception UEs, a configuration of a beam breadth to a beam width according to a location of the reception UE may be taken into consideration. More specifically, in groupcast communication, two or more reception UEs may be disposed to be adjacent to each other. Alternatively, a plurality of reception UEs may be concentrated and disposed in a specific direction. In groupcast communication, since the same sidelink control information and data information are transmitted to all reception UEs within a group, if a transmission UE transmits the same sidelink control information and data information to each of the reception UEs through a different beam while sweeping the beams, overhead may be increased. Accordingly, the transmission UE may configure a beam breadth or a beam width by taking into consideration a location of the reception UE. For example, the reception UE UE-2 1402 may assume that the reception UE UE-2 1402 is disposed in the northwest of the transmission UE UE-1 1401, and may assume that reception UEs UE-3, UE-4, and UE-5 are disposed in the southeast of the UE-1 1401. In this case, it may be assumed that sidelink control information and data information transmitted to one reception UE has a fixed beam breadth (or beam width) (e.g., a figure [x]). Accordingly, the UE-1 1401 may transmit sidelink control information and data information to the UE-2 1402 disposed in the northwest of the UE-1 1401 through a beam having a beam breadth (or a beam width) of the figure [x]. In contrast, the UE-1 1401 may transmit sidelink control information and data information to the UE-3, UE-4, and UE-5 disposed in the southeast of the UE-1 1401 through a beam having a beam breadth (or a beam width) of a figure [y]. In this case, [y] may have a greater value than [x]. The value [y] may be determined depending on a distribution of locations of reception UEs.

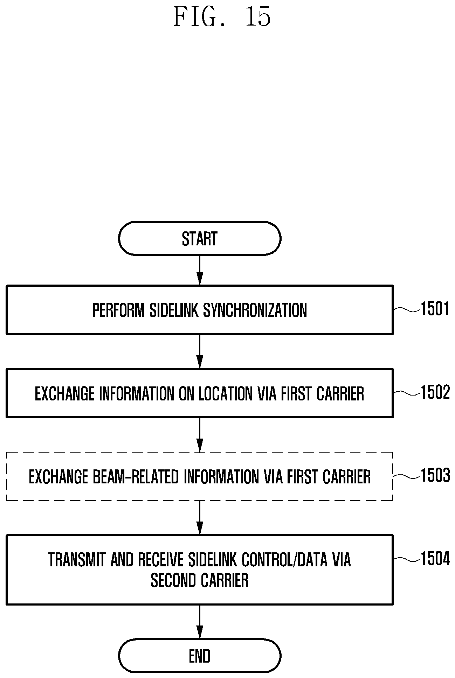

FIG. 15 is a diagram illustrating a procedure of obtaining a beam in sidelink communication according to an embodiment of the disclosure.

In FIG. 15, sidelink UEs may perform synchronization with the various sidelink synchronization signal sources described with reference to FIG. 4. In this case, the sidelink synchronization may be performed through the FR1 (step 1501). In this case, sidelink control information and data information may be transmitted and received through the mmWave band (FR2), and the sidelink synchronization may be performed through the FR1. Furthermore, for example, the sidelink synchronization and the transmission and reception of configuration information for sidelink unicast or groupcast communication may be performed through the FR1, and the sidelink control information and data information may be transmitted and received through the FR2 or the sidelink synchronization and sidelink control information may be transmitted and received through the FR1, and the sidelink data information may be transmitted and received through the FR2. The sidelink synchronization in the FR1 may be performed through one of the methods described with reference to FIGS. 8A, 8B, 9A, and 9B. Analog beamforming (or hybrid beamforming) may not be performed in the FR1, and analog beamforming (or hybrid beamforming) may be performed only in the FR2.

In the examples, an FR1 carrier may be defined as a first carrier, and an FR2 carrier may be defined as a second carrier. In such a case, in order to support the aforementioned operations, both the first carrier and the second carrier may be preconfigured or may be configured through system information or RRC signaling from a base station. Furthermore, for example, the first carrier may be preconfigured, and the second carrier may be indicated based on sidelink master information transmitted through the PSBCH of an S-SSB.

The UEs that have performed the sidelink synchronization through the S-SSB transmitted through the first carrier may exchange information (e.g., a zone ID, (x, y, z) coordinates, or (x, y) coordinates) on locations of the UEs through the first carrier (step 1502). Through PC-5 RRC, a sidelink transmission UE and a sidelink reception UE that perform unicast communication may be configured with parameters for calculating their locations as described with reference to FIGS. 11, 12, and 13 through the first carrier. The sidelink transmission UE may transmit its own location information to the sidelink reception UE through a sidelink control channel or a sidelink data channel. The sidelink control channel or the sidelink data channel may be transmitted through the second carrier, but may be transmitted through the first carrier until the exchange of location information between the transmission UE and the reception UE is completed and a beam is formed. Furthermore, for example, before a beam is formed, the sidelink control channel or the sidelink data channel may be transmitted through the second carrier by using a default beam. The sidelink reception UE may form a beam through the method described with reference to FIG. 14 by using the location information received from the sidelink transmission UE and its own location information.

If one sidelink transmission UE and two or more reception UEs attempt to perform groupcast communication, a plurality of pieces of unicast communication may be assumed. For example, a sidelink transmission UE may be assumed as a UE-1, and sidelink transmission UEs may be assumed as a UE-2, a UE-3, and a UE-4, respectively. In this case, the UE-1 may form a beam in the direction of the UE-2 and perform unicast communication, the UE-1 may form a beam in the direction of the UE-3 and perform unicast communication, and the UE-1 may form a beam in the direction of the UE-4 and perform unicast communication. That is, if N UEs form one group and attempt to perform groupcast communication, the N UEs may perform groupcast communication by using (N-1) unicast communication. However, such a method may increase unnecessary signaling overhead and the delay of sidelink groupcast communication.

In order to solve such a problem, in groupcast communication, a transmission UE may obtain location information of reception UEs that perform groupcast communication, and may transmit sidelink control information and data information in a beam direction in which the most reception UEs can receive the sidelink control information and data information. Such an operation may also be applied to broadcast communication.

In the examples, the exchange of the location information between the sidelink transmission UE and the sidelink reception UEs may be performed through the first carrier through which a sidelink synchronization procedure is performed. The reason for this is that a beam sweeping operation may not be performed in order to obtain location information because the first carrier does not need to form an analog beam. Accordingly, sufficient coverage can be secured, and sidelink communication latency can be reduced.

Meanwhile, the sidelink transmission UE and reception UEs that have obtained the location information through the first carrier may exchange additional beam-related information through the first carrier (step 1503). For example, in FIG. 14, the UE-1 and the UE-2 may exchange their preferred beam indices. Furthermore, for example, different panels may be mounted on the front bumper and rear bumper of a vehicle. Each panel may form a different beam. In a platooning scenario in which vehicles form a group and drive, information of transmission beams and reception beams (or transmission panels and reception panels) between the vehicles may need to be exchanged. In such a case, 1-bit information that represents "Front" or "Rear" may be included in the aforementioned beam-related information. Likewise, it may need to distinguish between a horizontal beam direction and a vertical beam direction. In such a case, 1-bit information that represents "H" or "V" may be included in the aforementioned beam-related information.

The sidelink UEs that have obtained the aforementioned location information and beam-related information may form beams by using one of the method described with reference to FIG. 14, and may transmit or receive sidelink control information and data information in corresponding beam directions (step 1504).

The aforementioned method of obtaining a beam based on a location may be activated or deactivated. More specifically, in unicast communication, in a PC5-RRC connection setup process, the aforementioned method of obtaining a beam based on a location may be activated or deactivated between a sidelink transmission UE and a sidelink reception UE. In groupcast communication, UEs participating in groupcast communication may perform PC5-RRC connection setup for unicast communication. In such a case, as in unicast communication, the aforementioned method of obtaining a beam based on a location may be activated or deactivated through PC5-RRC.

Furthermore, for example, information on the activation or deactivation of the method of obtaining a beam based on a location may be explicitly or implicitly configured in resource pool information which is configured (an in-coverage scenario) through system information or RRC signaling from a base station or is preconfigured (an out-of-coverage scenario). If the information on the activation or deactivation is explicitly activated or deactivated, the information may be configured in the resource pool information in an On/Off or Enable/Disable form. In the case where the information on the activation or deactivation is implicitly activated or deactivated, if parameters for calculating location information have been configured in a resource pool, it may be assumed that the method of obtaining a beam based on a location has been activated. If the parameters for calculating location information have not been configured in the resource pool, it may be assumed that the method of obtaining a beam based on a location has been deactivated.

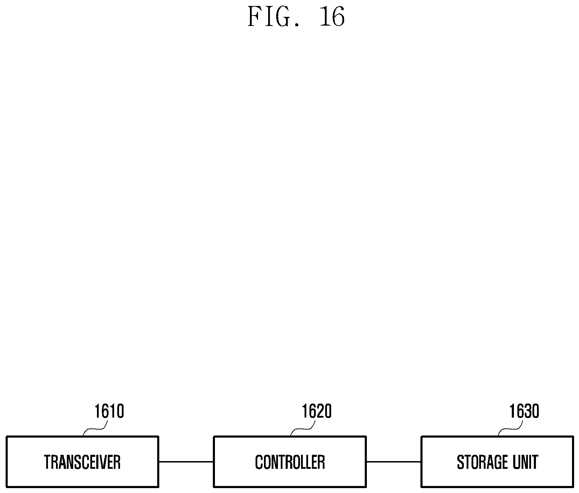

FIG. 16 is a diagram illustrating a structure of a UE according to an embodiment of the present disclosure.

Referring to FIG. 16, the UE may include a transceiver 1610, a controller 1620, and a storage unit 1630. In this disclosure, the controller may be defined as a circuit or an application-specific integrated circuit or at least one processor.

The transceiver 1610 may transmit and receive signals to and from another network entity. The transceiver 1610 may receive system information from a base station, for example, and may receive a synchronization signal or a reference signal.

The controller 1620 may control an overall operation of the UE according to an embodiment proposed in the disclosure.

The storage unit 1630 may store at least one of information transmitted and received through the transceiver 1610 and information generated through the controller 1620.

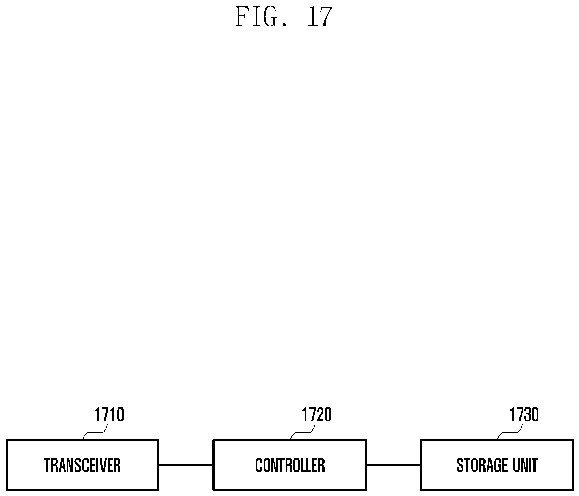

FIG. 17 is a diagram illustrating a structure of a base station according to an embodiment of the present disclosure.

With reference to FIG. 17, the base station may include a transceiver 1710, a controller 1720, and a storage unit 1730. In this disclosure, the controller may be defined as a circuit or an application-specific integrated circuit or at least one processor.

The transceiver 1710 may transmit and receive signals to and from another network entity. The transceiver 1710 may transmit system information to a UE, for example, and may transmit a synchronization signal or a reference signal.

The controller 1720 may control an overall operation of the base station according to an embodiment proposed in the disclosure.

The storage unit 1730 may store at least one of information transmitted and received through the transceiver 1710 and information generated through the controller 1720.

## Claims

1. A method performed by a first user equipment (UE) in a wireless communication system, the method comprising:

   performing sidelink synchronization with a second UE;
   transmitting, to the second UE, location information of the first UE via a first carrier;
   receiving, from the second UE, information on a beam via a first carrier; and
   transmitting sidelink control information and sidelink data information based on the received information on the beam,
   wherein the beam is generated by the second UE based on the transmitted location information of the first UE and location information of the second UE, and
   the sidelink data information is transmitted via a second carrier.

2. The method of claim 1, wherein the sidelink control information is transmitted via the first carrier.

3. The method of claim 1, wherein:

   the sidelink control information is transmitted via the second carrier, and
   the information on the beam comprises at least one of a beam direction, a beam breadth, and a beam width.

4. The method of claim 1, further comprising receiving sidelink synchronization information,

   wherein the sidelink synchronization information is received from at least one of a global navigation satellite system (GNSS), a base station, the second UE, and another sidelink UE, and the second carrier is indicated by the received sidelink synchronization information.

5. A method performed by a second user equipment (UE) in a wireless communication system, the method comprising:

   performing sidelink synchronization with a first UE;
   receiving, from the first UE, location information of the first UE via a first carrier;
   generating a beam based on the received location information of the first UE and location information of the second UE;
   transmitting, to the first UE, information on the generated beam via the first carrier; and
   receiving sidelink control information and sidelink data information based on the transmitted information on the beam,
   wherein the sidelink data information is transmitted via a second carrier.

6. The method of claim 5, wherein the sidelink control information is received via the first carrier.

7. The method of claim 5, wherein:

   the sidelink control information is received via the second carrier, and
   the information on the beam comprises at least one of a beam direction, a beam breadth, and a beam width.

8. The method of claim 5, wherein:

   sidelink synchronization information is received by the first UE from at least one of a global navigation satellite system (GNSS), a base station, the second UE, and another sidelink UE, and the second carrier is indicated by the sidelink synchronization information received by the first UE.

9. A first user equipment (UE) comprising:

   a transceiver capable of transmitting and receiving at least one signal; and
   a controller combined with the transceiver,

wherein the controller is configured to:

perform sidelink synchronization with a second UE,
transmit, to the second UE, location information of the first UE via a first carrier,
receive, from the second UE, information on a beam via a first carrier, and
transmit sidelink control information and sidelink data information based on the received information on the beam,
wherein the beam is generated by the second UE based on the transmitted location information of the first UE and location information of the second UE, and
the sidelink data information is transmitted via a second carrier.

10. The first UE of claim 9, wherein the sidelink control information is transmitted via the first carrier.

11. The first UE of claim 9, wherein:

the sidelink control information is transmitted via the second carrier, and
the information on the beam comprises at least one of a beam direction, a beam breadth, and a beam width.

12. The first UE of claim 9, wherein:

the controller is further configured to receive sidelink synchronization information,
wherein the sidelink synchronization information is received from at least one of a global navigation satellite system (GNSS), a base station, the second UE, and another sidelink UE, and
the second carrier is indicated by the received sidelink synchronization information.

13. A second user equipment (UE) comprising:

a transceiver capable of transmitting and receiving at least one signal; and
a controller combined with the transceiver,
wherein the controller is configured to:

perform sidelink synchronization with a first UE,
receive, from the first UE, location information of the first UE via a first carrier,
generate a beam based on the received location information of the first UE and location information of the second UE,
transmit, to the first UE, information on the generated beam via the first carrier, and
receive sidelink control information and sidelink data information based on the transmitted information on the beam,
wherein the sidelink data information is transmitted via a second carrier.

14. The second UE of claim 13, wherein the sidelink control information is received via the first carrier.

15. The second UE of claim 13, wherein:

the sidelink control information is received via the second carrier,
the information on the beam comprises at least one of a beam direction, a beam breadth, and a beam width,
sidelink synchronization information is received by the first UE from at least one of a global navigation satellite system (GNSS), a base station, the second UE, and another sidelink UE, and
the second carrier is indicated by the sidelink synchronization information received by the first UE.

# FIG. 1A

(a) IN-COVERAGE SCENARIO

# FIG. 1B

(b) PARTIAL COVERAGE SCENARIO

# FIG. 1C

Sidelink (SL)

Sidelink (SL)

UE-1

UE-2

121

122

(c) OUT-OF COVERAGE SCENARIO

# FIG. 1D

(d) INTER –CELL V2X COMMUNICATION SCENARIO

# FIG. 2A

UE-1

201

UE-2

202

(a) UNICAST V2X COMMUNICATION

FIG. 2B

(b) GROUPCAST V2X COMMUNICATION

# FIG. 3

| UE-A |
|---|
| PC5 Signaling Protocol |
| PC5-RRC |
| PDCP |
| RLC |
| MAC |
| PHY |

| UE-B |
|---|
| PC5 Signaling Protocol |
| PC5-RRC |
| PDCP |
| RLC |
| MAC |
| PHY |

FIG. 4

From GNSS directly

From eNB indirectly

From GNSS indirectly

From eNB directly

V2X UE

From UE directly

From gNB indirectly

From UE indirectly

From gNB directly

# FIG. 5

OFDM symbol

| 0 | 1 | 2 | 3 | 4 | 5 | 6 | 7 | 8 | 9 | 10 | 11 | 12 | 13 |

← 1 S-SSB →

⬚ : PSBCH    ▨ : S-PSS    ▨ : S-SSS    ☐ : GAP

EP 4 084 352 A1

# FIG. 6A

SFN#0     SFN#1     SFN#2     SFN#16     SFN#1023

| #0 | #1 | #2 | #3 | #4 | #5 | #6 | #7 | #8 | #9 | • • • | #0 | #1 | #2 | #3 | #4 | #5 | #6 | #7 | #8 | #9 |

Offset          Periodicity, P

: The slot where S-SSB is transmitted

# FIG. 6B

SFN#0　SFN#1　SFN#2　SFN#16　SFN#1023

#0 #1 #2 #3 #4 #5 #6 #7 #8 #9 ● ● ● #0 #1 #2 #3 #4 #5 #6 #7 #8 #9

Offset1

Periodicity, P1

Periodicity, P2

: The slot where S-SSB is transmitted or received　　: The slot where S-SSB is transmitted or received

EP 4 084 352 A1

# FIG. 7

# FIG. 8A

START

801 — (PREVIOUSLY) OBTAIN PARAMETERS RELATED TO TRANSMISSION OF S-SSB/PSBCH BASED ON CONFIGURATION INFORMATION

802 — DETERMINE WHETHER UE IS DISPOSED IN COVERAGE OF BASE STATION?

YES → 803 — DETERMINE WHETHER TO SELECT GNSS AS SYNCHRONIZATION SIGNAL SOURCE?

NO → 806 — DETERMINE WHETHER TO SELECT GNSS AS SYNCHRONIZATION SIGNAL SOURCE?

NO → Go to Figure 8b

803 NO

804 — - SELECT SLSS ID = 0
- USE syncOffsetIndicator

YES

805 — - SELECT SLSS ID = N
- USE syncOffsetIndicator

807 — - SELECT SLSS ID = 0

YES

808 — DETERMINE WHETHER syncOffsetIndicator3 HAS BEEN CONFIGURED?

NO →

YES → 809 — - USE syncOffsetIndicator3

810 — - USE syncOffsetIndicator1

811 — TRANSMIT S-SSB

END

# FIG. 8B

Go to Figure 8a

- SELECT SyncRef UE — 821

CONDITION B — 822

YES →

823
- SELECT SLSS ID = SLSS ID OF SELECTED SyncRef UE
- USE syncOffsetIndicator1 OR syncOffsetIndicator2

NO ↓

DETERMINE WHETHER RECEIVED SLSS HAS BEEN RECEIVED IN S-SSB RESOURCE INDICATED BY syncOffsetIndicator3? — 824

NO →

YES ↓

825
- SELECT SLSS ID = 169
- USE syncOffsetIndicator2

DETERMINE WHETHER UE HAS SELECTED SyncRef UE? — 826

NO →

YES ↓

827
- SELECT SLSS ID = INDEX OF SLSS ID OF SELECTED SYNCREF UE + 168
- USE syncOffsetIndicator1 OR syncOffsetIndicator2

828
- RANDOMLY SELECT SLSS ID BY USING NORMAL DISTRIBUTION FROM AN ID SET EXCEPT 168 AND 169
- USE syncOffsetIndicator1 OR syncOffsetIndicator2

829
TRANSMIT S-SSB

END

EP 4 084 352 A1

# FIG. 9A

START

OBTAIN INFORMATION ON GROUP —— 901

TRANSMIT S-SSB —— 902

RECEIVE BEAM REPORTS FROM UE MEMBERS —— 903

TRANSMIT AND RECEIVE SIDELINK CONTROL/DATA INFORMATION —— 904

END

# FIG. 9B

START

OBTAIN INFORMATION ON GROUP — 911

RECEIVE S-SSB TRANSMITTED BY GROUP LEADER — 912

REPORT BEAM-RELATED INFORMATION TO GROUP LEADER — 913

TRANSMIT AND RECEIVE SIDELINK CONTROL/DATA INFORMATION — 914

END

# FIG. 10

# FIG. 11

| W | | | | | |
|---|---|---|---|---|---|
| Zone 1 | Zone 2 | Zone 3 | Zone 1 | Zone 2 | Zone 3 |
| Zone 4 | Zone 5 | Zone 6 | Zone 4 | Zone 5 | Zone 6 |
| Zone 7 | Zone 8 | Zone 9 | Zone 7 | Zone 8 | Zone 9 |
| Zone 1 | Zone 2 | Zone 3 | Zone 1 | Zone 2 | Zone 3 |
| Zone 4 | Zone 5 | Zone 6 | Zone 4 | Zone 5 | Zone 6 |
| Zone 7 | Zone 8 | Zone 9 | Zone 7 | Zone 8 | Zone 9 |

L

B km

A km

FIG. 12

FIG. 13

# FIG. 14

# FIG. 15

```
           ╭──────────────╮
           │    START     │
           ╰──────────────╯
                  │
                  ▼
    ┌─────────────────────────────────────┐
    │   PERFORM SIDELINK SYNCHRONIZATION   │──1501
    └─────────────────────────────────────┘
                  │
                  ▼
    ┌──────────────────────────────────────────────┐
    │ EXCHANGE INFORMATION ON LOCATION VIA FIRST CARRIER │──1502
    └──────────────────────────────────────────────┘
                  │
                  ▼
    ┌ ─ ─ ─ ─ ─ ─ ─ ─ ─ ─ ─ ─ ─ ─ ─ ─ ─ ─ ─ ─ ─ ┐
      EXCHANGE BEAM-RELATED INFORMATION VIA FIRST CARRIER │──1503
    └ ─ ─ ─ ─ ─ ─ ─ ─ ─ ─ ─ ─ ─ ─ ─ ─ ─ ─ ─ ─ ─ ┘
                  │
                  ▼
    ┌─────────────────────────────────────┐
    │ TRANSMIT AND RECEIVE SIDELINK CONTROL/DATA VIA │──1504
    │            SECOND CARRIER            │
    └─────────────────────────────────────┘
                  │
                  ▼
           ╭──────────────╮
           │     END      │
           ╰──────────────╯
```

FIG. 16

```
       1610                    1620                    1630
┌──────────────────┐  ┌──────────────────┐  ┌──────────────────┐
│                  │  │                  │  │                  │
│   TRANSCEIVER    │──│    CONTROLLER    │──│   STORAGE UNIT   │
│                  │  │                  │  │                  │
└──────────────────┘  └──────────────────┘  └──────────────────┘
```

FIG. 17

1710

1720

1730

| TRANSCEIVER | CONTROLLER | STORAGE UNIT |

## INTERNATIONAL SEARCH REPORT

| International application No. |
|---|
| **PCT/KR2021/001820** |

| A. | CLASSIFICATION OF SUBJECT MATTER |
|---|---|

**H04B 7/0408**(2017.01)i; **H04B 7/06**(2006.01)i; **H04W 56/00**(2009.01)i; **H04W 4/40**(2018.01)i

According to International Patent Classification (IPC) or to both national classification and IPC

| B. | FIELDS SEARCHED |
|---|---|

Minimum documentation searched (classification system followed by classification symbols)

H04B 7/0408(2017.01); H04L 1/18(2006.01); H04W 16/28(2009.01); H04W 4/02(2009.01); H04W 4/46(2018.01); H04W 56/00(2009.01); H04W 72/02(2009.01); H04W 72/04(2009.01); H04W 8/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 동기화(synchronization), 위치 정보(location information), 빔 정보(beam information), 캐리어(carrier)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2018-0098299 A1 (LG ELECTRONICS INC.) 05 April 2018 (2018-04-05)<br>See paragraphs [0084]-[0085] and [0119]. | 1-15 |
| Y | US 2020-0045664 A1 (HYUNDAI MOTOR COMPANY et al.) 06 February 2020 (2020-02-06)<br>See paragraphs [0077]-[0080], [0093] and [0099]-[0100]. | 1-15 |
| A | US 2019-0327618 A1 (TELEFONAKTIEBOLAGET LM ERICSSON (PUBL)) 24 October 2019 (2019-10-24)<br>See paragraphs [0090]-[0167]; and figures 11-21. | 1-15 |
| A | WO 2020-033622 A1 (IDAC HOLDINGS, INC.) 13 February 2020 (2020-02-13)<br>See paragraphs [0173]-[0191]; and figures 11-13. | 1-15 |
| A | WO 2019-036578 A1 (INTEL CORPORATION) 21 February 2019 (2019-02-21)<br>See paragraphs [0091]-[0234]; and figures 6-26. | 1-15 |

☐ Further documents are listed in the continuation of Box C.　　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 May 2021** | **25 May 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/001820**

| Patent document cited in search report | | | Publication date (day/month/year) | Patent family member(s) | | | Publication date (day/month/year) |
|---|---|---|---|---|---|---|---|
| US | 2018-0098299 | A1 | 05 April 2018 | CN | 107439033 | A | 05 December 2017 |
| | | | | CN | 107439033 | B | 04 December 2020 |
| | | | | EP | 3280200 | A1 | 07 February 2018 |
| | | | | EP | 3280200 | B1 | 11 December 2019 |
| | | | | US | 10568057 | B2 | 18 February 2020 |
| | | | | WO | 2016-159716 | A1 | 06 October 2016 |
| US | 2020-0045664 | A1 | 06 February 2020 | KR | 10-2020-0016169 | A | 14 February 2020 |
| US | 2019-0327618 | A1 | 24 October 2019 | EP | 3556160 | A1 | 23 October 2019 |
| | | | | WO | 2018-108020 | A1 | 21 June 2018 |
| WO | 2020-033622 | A1 | 13 February 2020 | TW | 202025657 | A | 01 July 2020 |
| WO | 2019-036578 | A1 | 21 February 2019 | CN | 111213393 | A | 29 May 2020 |
| | | | | EP | 3669557 | A1 | 24 June 2020 |

Form PCT/ISA/210 (patent family annex) (July 2019)